# EUROPEAN PATENT APPLICATION

(11) **EP 4 625 950 A1**
(43) Date of publication of application: **01.10.2025**
(21) Application number: 23909936.9
(22) Date of filing: 30.11.2023
(51) Int. Cl.: H04M 1/02, F16C 11/04

(54) **ROTATING SHAFT MECHANISM AND FOLDABLE DEVICE**

(30) Priority: 26.12.2022 CN 202211689124
(71) Applicant: Huawei Technologies Co., Ltd., Shenzhen, Guangdong 518129 (CN)
(72) Inventor: WANG, Xu, Shenzhen, Guangdong 518129 (CN); ZHAO, Menglong, Shenzhen, Guangdong 518129 (CN); GONG, Lexing, Shenzhen, Guangdong 518129 (CN); ZOU, Lin, Shenzhen, Guangdong 518129 (CN); YUAN, Shenglan, Shenzhen, Guangdong 518129 (CN); LIU, Senxin, Shenzhen, Guangdong 518129 (CN); LIU, Zhuang, Shenzhen, Guangdong 518129 (CN)
(74) Representative: Körber, Martin Hans
(86) International application number: PCT/CN2023/135619
(87) International publication number: WO 2024/140006

(57) **Abstract**

A hinge (100) and a foldable device (1000) are provided. The hinge (100) includes a main shaft (110), connecting rods (120), fastening brackets (130), and support plates (140). The main shaft (110) serves as a fastener, and the connecting rods (120), the fastening brackets (130), and the support plates (140) serve as movable members and jointly form a connecting rod sliding block mechanism. The connecting rod (120) is slidably mounted on the fastening bracket (130), and the connecting rod (120) is pivoted on the main shaft (110). Two ends of the support plate (140) are pivoted on the main shaft (110) and the fastening bracket (130) respectively. When the fastening brackets (130) located on two sides of the main shaft (110) rotate, the connecting rods (120) and the support plates (140) may be driven to rotate, to switch the hinge (100) between an unfolded state and a folded state. The connecting rod sliding block mechanism in the hinge (100) has only three movable members and four lower pairs in total, and does not require a higher pair, so that the connecting rod sliding block mechanism has a small quantity of parts, a simple structure, and high reliability, and requires low costs.

## Description

This application claims priority to Chinese Patent Application No. 202211689124.6, filed with the China National Intellectual Property Administration on December 26, 2022 and entitled "HINGE AND FOLDABLE DEVICE", which is incorporated herein by reference in its entirety.

### TECHNICAL FIELD

Embodiments of this application relate to the field of foldable device technologies, and in particular, to a hinge and a foldable device.

### BACKGROUND

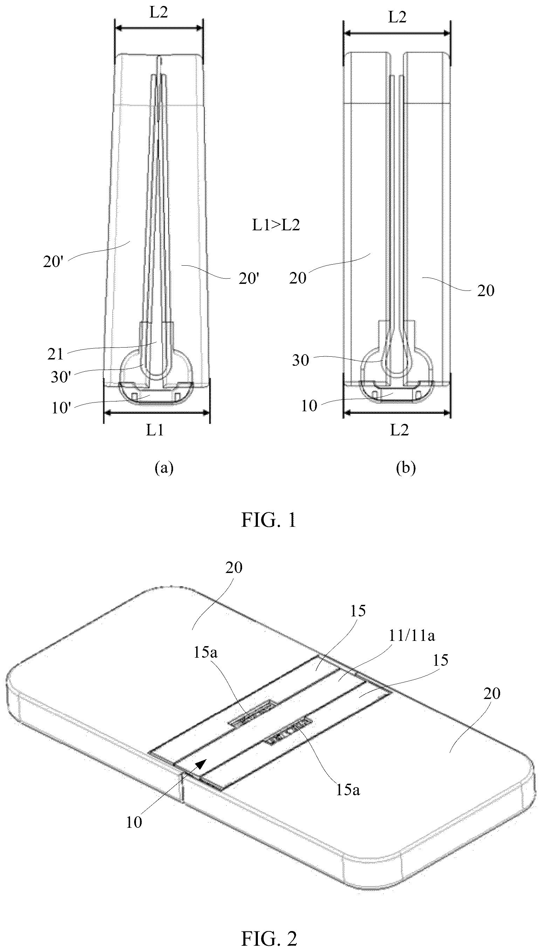

A foldable device (for example, a mobile phone having a foldable flexible display) implements unfolding and folding of two housings by using a hinge in the middle. According to a shape of the flexible display in a folded state, the hinge is classified into U-shaped and water drop-shaped hinges. As shown in (a) in FIG. 1, a U-shaped hinge 10' has a simple structure and low costs. In a folded state, there is a gap 21 between two housings 20', a maximum thickness L1 of the entire device is large, and a foreign matter may easily enter the gap 21, potentially causing damage to a flexible display 30'. As shown in (b) in FIG. 1, a water drop-shaped hinge 10 has a complex structure, and requires high costs. In a folded state, two housings 20 are stacked, and a thickness L2 of the entire device is small. A conventional water drop-shaped hinge has a large quantity of parts and a complex structure, and requires high costs.

### SUMMARY

Embodiments of this application provide a hinge and a foldable device, to resolve a problem that a conventional hinge has a large quantity of parts and a complex structure.

The following technical solutions are used in embodiments of this application.

According to a first aspect, an embodiment of this application provides a hinge, including a main shaft, a plurality of connecting rods, fastening brackets arranged in pairs, and support plates arranged in pairs. One or more connecting rods are respectively disposed on two sides of the main shaft along a direction perpendicular to an axial direction of the main shaft, and one end of each connecting rod is pivoted on the main shaft. Each pair of the fastening brackets is respectively disposed on the two sides of the main shaft along the direction perpendicular to the axial direction of the main shaft, the fastening bracket and the connecting rod that are located on a same side of the main shaft are correspondingly disposed, and the connecting rod is slidably connected to the fastening bracket corresponding to the connecting rod. Each pair of the support plates is respectively disposed on the two sides of the main shaft along the direction perpendicular to the axial direction of the main shaft, and the support plate and the fastening bracket that are located on a same side of the main shaft are correspondingly disposed. One end of each support plate is pivoted on the main shaft, and the other end thereof is pivoted on the fastening bracket corresponding to the support plate. Pivot axes, on the main shaft, of the connecting rod and the support plate that are located on a same side of the main shaft are spaced apart. The fastening brackets located on the two sides of the main shaft are capable of rotating relative to the main shaft, so that the hinge switches between an unfolded state and a folded state. In a process in which the hinge switches from the unfolded state to the folded state, the fastening brackets located on the two sides of the main shaft rotate toward each other, and the fastening brackets drive the connecting rods and the support plates that correspond to the fastening brackets to rotate, so that display accommodating space is formed between the support plates located on the two sides of the main shaft and the main shaft.

According to the hinge provided in this embodiment of this application, the main shaft serves as a fastener, and the connecting rods, the fastening brackets, and the support plates serve as movable members and jointly form a connecting rod sliding block mechanism. The connecting rod is slidably mounted on the fastening bracket, and the connecting rod is pivoted on the main shaft. Two ends of the support plate are pivoted on the main shaft and the fastening bracket respectively. When the fastening brackets located on the two sides of the main shaft rotate, the connecting rods and the support plates may be driven to rotate, to switch the hinge between the unfolded state and the folded state. The connecting rod sliding block mechanism in the hinge has only three movable members and four lower pairs in total, and does not require a higher pair, so that the connecting rod sliding block mechanism has a small quantity of parts, a simple structure, and high reliability, and requires low costs. When the hinge is switched to the folded state, the display accommodating space is formed between the support plates on the two sides of the main shaft and the main shaft, to accommodate a water drop-shaped bent part of a flexible display when the flexible display is folded.

In an optional implementation, the main shaft is of a flat strip shape. An accommodating groove for mounting a related part is provided on the main shaft. An outer side surface of the main shaft may be designed with an arc surface, to improve appearance effect of the hinge when the hinge is used in a foldable device.

In an optional implementation, the connecting rod is configured as a straight rod or a rod member having a specific bending shape. The connecting rod is configured as at least three connecting segments, to meet a rotating connection between the connecting rod and the main shaft and a sliding connection between the connecting rod and the fastening bracket. In a process of switching the hinge between the unfolded state and the folded state, the connecting rod does not interfere with another member.

In an optional implementation, the fastening bracket is strip-shape, so that the fastening bracket is reliably fastened to a first housing and a second housing, and a sliding connection between the fastening bracket and the connecting rod and a rotating connection between the fastening bracket and the support plate can be implemented.

In an optional implementation, the support plate extends along the axial direction of the main shaft, so that the support plate in an unfolded state can effectively support the flexible display. The support plate is rectangle-shaped.

In an optional implementation, in a process in which the hinge switches from the folded state to the unfolded state, the fastening brackets located on the two sides of the main shaft rotate away from each other, and the fastening brackets drive the connecting rods and the support plates that correspond to the fastening brackets to rotate, so that the support plates located on the two sides of the main shaft are flush and capable of covering one side of the main shaft.

The support plates located on the two sides are flush and cover one side of the main shaft, so that the support plates located on the two sides can support a corresponding region of the flexible display, and there is no need to dispose a main shaft support plate on the main shaft of the hinge in a related technology to support the corresponding region of the flexible display. This may simplify a structure.

In an optional implementation, pivot axes of the connecting rods located on the two sides of the main shaft are symmetrically disposed on two sides of pivot axes of a pair of support plates on the main shaft.

A symmetric surface is formed on the main shaft, the pivot axes of the support plates located on the two sides on the main shaft are disposed close to the symmetric surface, and the pivot axes of the connecting rods located on the two sides on the main shaft are disposed away from the symmetric surface. No avoidance hole needs to be provided in the support plate to avoid the connecting rod, so that the support plates that are unfolded on the two sides can better support corresponding parts of the flexible display, and reliability of the flexible display is improved.

In an optional implementation, when the hinge is in the folded state, the connecting rod is located on a side that is of the support plate corresponding to the connecting rod and that is opposite to the display accommodating space, and a spacing between the pivot axes of the connecting rods located on the two sides of the main shaft is greater than a spacing between the support plates that are arranged in pairs and that are close to the main shaft.

The spacing between the pivot axes of the connecting rods located on the two sides of the main shaft is increased, so that the connecting rod in the hinge in the folded state is located on an outer side of the corresponding support plate instead of a side close to the display accommodating space. In this way, the support plates that are unfolded on the two sides can better support the corresponding parts of the flexible display, and the reliability of the flexible display is improved.

In an optional implementation, the connecting rod and the main shaft may be in a pivot connection or a virtual axis connection, and both can implement the rotating connection between the connecting rod and the main shaft.

In an optional implementation, the fastening bracket has a first sliding portion, the connecting rod corresponding to the fastening bracket has a second sliding portion, and the first sliding portion and the second sliding portion are in a sliding fit, so that the connecting rod is slidably connected to the fastening bracket. The first sliding portion of the fastening bracket and the second sliding portion of the connecting rod are in a sliding fit, so that the stable sliding connection between the fastening bracket and the connecting rod can be implemented.

In an optional implementation, the first sliding portion is a guide groove provided on the fastening bracket, the second sliding portion is a guide arm disposed on the connecting rod, and the guide arm is slidably mounted in the guide groove. A manner of the guide groove and guide arm is used, so that it is easy to form and assemble, and the stable and reliable sliding connection between the fastening bracket and the connecting rod can be implemented.

In an optional implementation, the first sliding portion is a guide arm disposed on the fastening bracket, the second sliding portion is a guide groove provided on the connecting rod, and the guide arm is slidably mounted in the guide groove. In this way, the stable and reliable sliding connection between the fastening bracket and the connecting rod can also be implemented.

In an optional implementation, the support plate and the main shaft may be in a virtual axis connection or a pivot connection, and both can implement the rotating connection between the support plate and the main shaft.

In an optional implementation, the support plate and the main shaft are in a virtual axis connection, each support plate has one or more first arc arms, the main shaft has one or more first arc grooves corresponding to the one or more first arc arms, and the one or more first arc arms are correspondingly slidably mounted in the one or more first arc grooves so that the support plate is pivoted on the main shaft. The first arc arm of the support plate and the first arc groove of the main shaft are in a sliding fit, so that the stable and reliable rotating connection between the support plate and the main shaft can be implemented, a structure is simplified, and assembly is easy.

In an optional implementation, the first arc grooves on the two sides of the main shaft along the direction perpendicular to the axial direction of the main shaft may be provided in a staggered manner along the axial direction of the main shaft, so that the first arc grooves corresponding to the support plates located on the two sides are formed on the main shaft. Correspondingly, the first arc arms of the support plates located on the two sides are disposed in a staggered manner along the axial direction of the main shaft. In addition, the first arc grooves on the two sides of the main shaft along the direction perpendicular to the axial direction of the main shaft may alternatively be provided opposite to each other.

In an optional implementation, a first baffle plate may be disposed at one end of the first arc arm, and a vacancy for accommodating the first baffle plate may be disposed on the main shaft, so that structural strength of the first arc arm may be enhanced. In a process in which the first arc arm slides relative to the first arc groove, a limiting function on the first arc arm along the axial direction of the main shaft may be formed.

In an optional implementation, each support plate has a first arc groove, the main shaft has a first arc arm, and the first arc arm is slidably mounted in the first arc groove. In this way, the support plate can also be pivoted on the main shaft.

In an optional implementation, the support plate and the fastening bracket may be in a virtual axis connection or a pivot connection, and both can implement the rotating connection between the support plate and the fastening bracket.

In an optional implementation, the support plate and the fastening bracket are in a virtual axis connection, each support plate has one or more second arc arms, the fastening bracket has one or more second arc grooves corresponding to the one or more second arc arms, and the one or more second arc arms are correspondingly slidably mounted in the one or more second arc grooves, so that the support plate is pivoted on the fastening bracket. The second arc arm of the support plate and the second arc groove of the fastening bracket are in a sliding fit, so that the stable and reliable rotating connection between the support plate and the fastening bracket can be implemented, a structure is simplified, and assembly is easy.

In an optional implementation, a second baffle plate may be disposed at one end of the second arc arm, and disposition of the second baffle plate may enhance structural strength of the second arc arm. In a process in which the second arc arm slides relative to the second arc groove, a limiting function on the second arc arm along the axial direction of the main shaft may be formed.

In an optional implementation, the fastening bracket has a second arc groove, each support plate has a second arc arm, and the second arc arm is slidably mounted in the second arc groove. In this way, the support plate can also be pivoted on the fastening bracket.

In an optional implementation, the hinge further includes a synchronization assembly disposed on the main shaft, configured to enable the connecting rods located on the two sides of the main shaft to rotate synchronously in opposite directions. The connecting rods, the fastening brackets, and the support plates located on the two sides of the main shaft form two sets of connecting rod sliding block mechanisms, and the two sets of connecting rod sliding block mechanisms move synchronously in opposite directions. When the hinge is used in the foldable device, the first housing and the second housing can be folded or unfolded synchronously.

In an optional implementation, the synchronization assembly includes first gears that are correspondingly fastened to the connecting rods located on the two sides of the main shaft, a pivot axis of each connecting rod coincides with an axis of the first gear corresponding to the connecting rod, and the first gears located on the two sides of the main shaft are in a drive fit. Synchronous folding or unfolding of parts on the two sides of the main shaft can be implemented.

In an optional implementation, the synchronization assembly includes the first gears and further includes an even number of second gears that are sequentially engaged, and the first gears located on the two sides of the main shaft are driven by the even number of second gears. Synchronous folding or unfolding of the parts on the two sides of the main shaft can be implemented, and the spacing between the pivot axes of the connecting rods located on the two sides of the main shaft can be further increased. No avoidance hole needs to be provided in the support plate to avoid the connecting rod, and the reliability of the flexible display is improved.

In an optional implementation, the second gears are all single gears. The single gear is a form in which one gear is disposed on one shaft. The spacing between the pivot axes of the connecting rods located on the two sides of the main shaft may be increased through a plurality of single gears.

In an optional implementation, two of the second gears are a dual gear. Each dual gear includes a first tooth portion and a second tooth portion that are coaxially disposed. The first gears located on the two sides of the main shaft are correspondingly engaged with the first tooth portions of the dual gears, and the second tooth portions of the two dual gears are engaged with each other. The dual gear is a form in which two gears with different diameters are disposed on one shaft. Synchronous folding or unfolding of the parts on the two sides of the main shaft may be implemented by using a small quantity of dual gears, so that a reverse synchronous motion error is reduced, the spacing between the pivot axes of the connecting rods located on the two sides of the main shaft is increased, and the reliability of the flexible display is improved.

In an optional implementation, the synchronization assembly may be a belt drive mechanism. Two belt pulleys in the belt drive mechanism are correspondingly disposed on two connecting rods, an axis of the belt pulley coincides with a pivot axis of the connecting rod, a drive belt is wound around the two belt pulleys, and the drive belt is 8-shaped. Synchronous folding or unfolding of the connecting rods located on the two sides of the main shaft is implemented by using the belt drive mechanism.

In an optional implementation, the hinge further includes a damping assembly mounted on the main shaft, and when the connecting rod rotates relative to the main shaft, the damping assembly is configured to provide a damping force for the connecting rod.

The damping assembly is disposed to provide a damping force for the connecting rod, so that a movable member linked with the connecting rod has damping effect. When components on the two sides of the main shaft are in a folded state, an unfolded state, or an intermediate state, an external force is needed to change positions of the components on the two sides of the main shaft. When the hinge is used in the foldable device, an external force is needed to adjust relative positions of the first housing and the second housing, and the first housing and the second housing cannot freely rotate relative to each other when there is no external force.

In an optional implementation, end parts of the plurality of first gears have first cam portions. The damping assembly includes a first one-piece cam and a first elastic member. The first one-piece cam is capable of moving in an axial direction of the first gear relative to the first cam portion, and the first one-piece cam has a second cam portion that is capable of being correspondingly engaged with the first cam portion. The first elastic member is capable of acting on the first one-piece cam to press the second cam portion against the first cam portion.

When the connecting rod rotates relative to the main shaft, the first cam portion on the first gear rotates relative to the second cam portion of the first one-piece cam. When a protrusion portion of the first cam portion slides into a recess portion of the second cam portion, the first elastic member is compressed, a specific damping force is generated between the first cam portion and the second cam portion, and the first cam portion and the second cam portion are kept engaged. The connecting rod and the main shaft are kept relatively static, so that the folded state or the unfolded state of the hinge can be implemented.

When the hinge switches from the intermediate state to the unfolded state or the folded state, the protrusion portion of the first cam portion tends to slide into the recess portion of the second cam portion, to implement a self-unfolding or self-closing motion of the connecting rod relative to the main shaft, and implement self-unfolding of the foldable device when the foldable device is close to the unfolded state or self-closing of the foldable device when the foldable device is close to the folded state.

In an optional implementation, the damping assembly further includes a bracket and a first rod that is coaxially connected to the first gear correspondingly. The bracket is fastened to the main shaft. Two ends of the first rod are mounted on the bracket, and the first one-piece cam is slidably mounted on the first rod. The structure is simple and reliable in operation.

In an optional implementation, the bracket includes a first bracket and a second bracket that are distributed on two sides of the first gear along the axial direction of the first gear. The first rod passes through the first bracket, the first one-piece cam, and the second bracket. The first rod has a head and a clamping connector that are disposed opposite to each other. The head of the first rod is clamped outside the first bracket, and the clamping connector of the first rod is limited outside the second bracket in a manner of being cooperated with a limiting member. Sizes of the head of the first rod and the limiting member are greater than a size of a hole in the bracket for the first rod to pass through, so that the first rod is mounted on the first bracket and the second bracket in a limiting manner along the axial direction.

In an optional implementation, an end that is of the first rod and that has the clamping connector passes through the bracket, and the clamping connector is in a clamping fit with a clamping slot of the limiting member. Under an action of the first elastic member, the first rod can be limited on the bracket along the axial direction, so that the first rod does not move in the axial direction, and reliability is improved.

In an optional implementation, there is one first one-piece cam and one first elastic member, and each first gear has one first cam portion.

In an optional implementation, there are two first one-piece cams and two first elastic members, each first gear has two first cam portions distributed in a back-to-back manner, and a set of the first one-piece cam and the first elastic member is separately disposed on two sides of the first gear in the axial direction.

In both the foregoing two manners, the second cam portion of the first one-piece cam can be pressed against the corresponding first cam portion, thereby implementing damping effect when the hinge switches between the folded state and the unfolded state.

In an optional implementation, the damping mechanism further includes a second one-piece cam and a single cam correspondingly spaced apart from the first cam portion. The second one-piece cam is slidably mounted on the first rod, and the single cam is connected to the first rod in a synchronous rotation manner. The second one-piece cam has a third cam portion that is capable of being correspondingly engaged with the single cam. The first elastic member is disposed between the first one-piece cam and the second one-piece cam in a compressed manner, the first elastic member is sleeved outside the first rod, and the first elastic member is capable of acting on the second one-piece cam to press the third cam portion against the single cam.

In small space, the second one-piece cam and the single cam are additionally disposed, so that a damping force of the hinge is increased when the hinge switches between the folded state and the unfolded state, surface wear of matching cams is reduced, and a service life of the device is prolonged.

When the connecting rod rotates relative to the main shaft, the first gear drives, through the first rod, the single cam to rotate relative to the third cam portion of the second one-piece cam. When a protrusion portion of the single cam slides into a recess portion of the third cam portion, the first elastic member is compressed, a specific damping force is generated between the single cam and the third cam portion, and the single cam and the third cam portion are kept engaged. The connecting rod and the main shaft are kept relatively static, so that the folded state or the unfolded state of the hinge can be implemented.

When the hinge switches from the intermediate state to the unfolded state or the folded state, the protrusion portion of the single cam tends to slide into the recess portion of the third cam portion, and the single cam and the third cam portion are engaged with each other, to implement a self-unfolding or self-closing motion of the connecting rod relative to the main shaft, and implement self-unfolding of the foldable device when the foldable device is close to the unfolded state or self-closing of the foldable device when the foldable device is close to the folded state.

In an optional implementation, the damping assembly further includes a hover cam, a second elastic member, and a second rod. The second gear and the hover cam are separately connected to the second rod in a synchronous rotation manner. The second one-piece cam has a fourth cam portion in a position corresponding to at least one of the second gears, and the fourth cam portion is capable of being correspondingly engaged with the hover cam. The second elastic member is disposed between the first one-piece cam and the hover cam in a compressed manner, the second elastic member is sleeved outside the second rod, and the second elastic member is capable of acting on the hover cam to press the hover cam against the fourth cam portion.

When the connecting rod rotates to a predetermined angle position, and a protrusion portion of the hover cam correspondingly slides into a recess portion of the fourth cam portion, the hover cam and the fourth cam portion are kept engaged, and the connecting rod and the main shaft are kept relatively static, so that the hinge can implement reliable hover effect at a predetermined position, and wear between matching cams can be reduced.

In an optional implementation, the damping assembly further includes a hover cam, a second elastic member, and a second rod. The second gear and the hover cam are separately connected to the second rod in a synchronous rotation manner. The first one-piece cam has a fifth cam portion in a position corresponding to at least one of the second gears, and the fifth cam portion is capable of being correspondingly engaged with the hover cam. The second elastic member is disposed between the bracket and the hover cam in a compressed manner, the second elastic member is sleeved outside the second rod, and the second elastic member is capable of acting on the hover cam to press the hover cam against the fifth cam portion.

When the connecting rod rotates relative to the main shaft, the first gear and the second gear rotate, and the second gear drives, through the second rod, the hover cam to rotate relative to the fifth cam portion of the second one-piece cam. When the connecting rod rotates to a predetermined angle position, and a protrusion portion of the hover cam correspondingly slides into a recess portion of the fifth cam portion, the second elastic member is compressed, a specific damping force is generated between the hover cam and the fifth cam portion, the hover cam and the fifth cam portion are kept engaged, and the connecting rod and the main shaft are kept relatively static, so that the hinge can implement reliable hover effect at a predetermined position, and wear between matching cams can be reduced.

According to a second aspect, an embodiment of this application provides a foldable device, including a hinge, a first housing, a second housing, and a flexible display. The hinge is located between the first housing and the second housing, a fastening bracket located on one side of a main shaft is fastened to the first housing, a fastening bracket located on the other side of the main shaft is fastened to the second housing, two end parts of the flexible display are respectively fastened to the first housing and the second housing, and a middle region of the flexible display is disposed corresponding to the hinge.

When positions of the first housing and the second housing relative to the main shaft in the hinge are adjusted, positions of the fastening brackets located on the two sides of the main shaft relative to the main shaft are adjusted. In a process in which the foldable device is gradually folded, the flexible display is bent along with the first housing and the second housing until the hinge is in a folded state, and a region that is of the flexible display and that corresponds to the hinge is bent to form a water drop shape. The water drop-shaped part may be accommodated in display accommodating space of the hinge in the folded state. In a process in which the foldable device is gradually unfolded, the flexible display is unfolded along with the first housing and the second housing until the hinge is in an unfolded state, and the flexible display is supported on the first housing, the hinge, and the second housing.

In an optional implementation, the foldable device includes one hinge and one first housing and one second housing that are respectively connected to two sides of the hinge. The first housing and the second housing are folded and unfolded by using the hinge.

In an optional implementation, the foldable device includes at least two first housings, one second housing is disposed between every two adjacent first housings, and one hinge is connected between a first housing and a second housing that are adjacent. When the foldable device is folded, a stacked structure of at least three layers is formed.

### BRIEF DESCRIPTION OF DRAWINGS

(a) and (b) in FIG. 1 are diagrams of structures of a U-shaped hinge and a water drop-shaped hinge in a related technology when being used in a foldable device;
FIG. 2 is a diagram of a structure of a hinge when being used in a foldable device in an unfolded state in a related technology;
FIG. 3 is a diagram of a water drop-shaped hinge in a related technology;
FIG. 4 is a diagram of a structure of a hinge in a folded state in a related technology;
FIG. 5 is a partial sectional view of a hinge when being used in a foldable device in a folded state in a related technology;
FIG. 6 is a diagram of a structure of a foldable device according to an embodiment of this application;
FIG. 7 is a three-dimensional exploded view of the foldable device in FIG. 6;
(a) and (b) in FIG. 8 are diagrams of structures of the foldable device in FIG. 6 in an unfolded state and a folded state, where a flexible display is not shown;
FIG. 9 is a three-dimensional exploded view of the foldable device in (a) in FIG. 8;
FIG. 10 is a schematic diagram of a hinge according to an embodiment of this application;
FIG. 11 is a three-dimensional exploded view of a hinge according to an embodiment of this application;
FIG. 12 is a three-dimensional assembly diagram of the hinge in FIG. 11;
FIG. 13 is a three-dimensional assembly diagram of the hinge in FIG. 12 from another angle;
FIG. 14 is a partial sectional view of the foldable device in (a) in FIG. 8 along a line A-A;
FIG. 15 is a partial sectional view of the foldable device in (b) in FIG. 8 along a line B-B, where a first housing and a second housing are not shown;
FIG. 16 is a diagram of a structure of a hinge when a thin steel sheet is disposed in a related technology;
FIG. 17 is a diagram of a structure of a hinge when a main shaft support plate moves up and down in a related technology;
FIG. 18 is a diagram of a structure of a support plate in the hinge in FIG. 11;
FIG. 19 is a three-dimensional assembly diagram of a synchronization assembly in a hinge according to another embodiment of this application;
FIG. 20 is a three-dimensional exploded view of a synchronization assembly in a hinge according to another embodiment of this application;
FIG. 21 is a diagram of a structure of a dual gear of a synchronization assembly in a hinge according to another embodiment of this application;
FIG. 22 is a three-dimensional assembly diagram of a synchronization assembly and a damping assembly in the hinge in FIG. 11;
FIG. 23 is a three-dimensional exploded view of the synchronization assembly and the damping assembly in FIG. 22;
FIG. 24 is a three-dimensional assembly diagram of a synchronization assembly and a damping assembly in a hinge according to another embodiment of this application;
FIG. 25 is a three-dimensional exploded view of the synchronization assembly and the damping assembly in FIG. 24;
FIG. 26 is a diagram of a structure of a first cam and a second cam in a hinge in a related technology; and
(a) and (b) in FIG. 27 are diagrams of structures of a second one-piece cam and a hover cam in the damping assembly in FIG. 22 when the second one-piece cam and the hover cam are not engaged and when the second one-piece cam and the hover cam are engaged.

### Reference numerals:

10': hinge; 20': housing; 21: gap; 30': flexible display;
10: hinge; 11: main shaft; 11a: main shaft support plate; 12: fastening bracket; 13: connecting rod; 14: swing rod; 15: support plate; 15a: avoidance hole; 16: thin steel sheet; 17: first cam; 18: second cam; 20: housing; 30: flexible display;
1000: foldable device;
100: hinge; 101: display accommodating space;
110: main shaft; 110a: symmetric surface; 111: accommodating groove; 112: first arc groove;
120: connecting rod; 120a: pivot axis; 120': connecting rod; 121: second sliding portion; 121a: guide arm;
130: fastening bracket; 131: first sliding portion; 131a: guide groove; 132: barrier wall; 133: second arc groove;
140: support plate; 140a: axis; 140b: axis; 140c: end part; 141: first arc arm; 142: first baffle plate; 143: second arc arm; 144: second baffle plate;
150: synchronization assembly; 151: first gear; 152: second gear; 152a: single gear; 152b: dual gear; 1521: first tooth portion; 1522: second tooth portion;
160: damping assembly; 161: first cam portion; 161a: protrusion portion; 161b: recess portion; 162: first one-piece cam portion; 1621: second cam portion; 1621a: protrusion portion; 1621b: recess portion; 1622: fifth cam portion; 1623: groove; 163: first elastic member; 164: bracket; 164a: first bracket; 164b: second bracket; 1641: first rod; 1641a: head; 1641b: clamping connector; 1642: second rod; 1643: third rod; 165: second one-piece cam; 1651: third cam portion; 1652: fourth cam portion; 1652b: recess portion; 166: single cam; 167: hover cam; 167a: protrusion portion; 168: second elastic member; 169: limiting member; 1691: clamping slot;
200: first housing; 300: second housing; 400: flexible display.

### DESCRIPTION OF EMBODIMENTS

To make technical problems to be resolved, technical solutions, and beneficial effects of this application clearer, the following further describes this application in detail with reference to the accompanying drawings and embodiments. It should be understood that the specific embodiments described herein are merely used to explain this application but are not intended to limit this application. Although this application is described with reference to some embodiments, this does not mean that features of this application are limited to the implementations. On the contrary, a purpose of describing this application with reference to an implementation is to cover another option or modification that may be derived based on claims of this application. To provide an in-depth understanding of this application, the following descriptions include a plurality of specific details. This application may alternatively be implemented without using these details. In addition, to avoid confusion or blurring a focus of this application, some specific details are omitted from the description. It should be noted that embodiments in this application and the features in embodiments may be mutually combined in the case of no conflict.

It should be noted that when an element is referred to as "fastened to" or "disposed on" another element, the element may be directly or indirectly on the another element. When an element is referred to as "connected to" another element, the element may be directly or indirectly connected to the another element.

It should be understood that in descriptions of embodiments of this application, it should be noted that, unless otherwise clearly specified and limited, terms "mount" and "connection" should be understood in a broad sense. For example, "connection" may be a detachable connection, a nondetachable connection, a direct connection, or an indirect connection through an intermediate medium. Orientation or position relationships indicated by terms "length", "width", "upper", "lower", "front", "rear", "left", "right", "vertical", "horizontal", "top", "bottom", "inner", "outer", and the like are orientation or position relationships based on the accompanying drawings. This is merely intended to facilitate and simplify the description of this application, but is not intended to indicate or imply that an indicated apparatus or element needs to have a specific orientation or be constructed and operated in a specific orientation. Therefore, such terms cannot be construed as a limitation on this application.

In addition, the terms "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of this application, unless otherwise specifically limited, "a plurality of" means two or more. The character "/" in this specification generally indicates an "or" relationship between associated objects.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "comprise", "have", and their variants all mean "include but are not limited to", unless otherwise specifically emphasized in another manner.

Refer to (b) in FIG. 1, FIG. 2, and FIG. 3, a hinge 10 of a foldable device in a related technology may implement folding and unfolding of two housings 20. The conventional hinge 10 includes a main shaft 11, a fastening bracket 12, a connecting rod 13, a swing rod 14, and a support plate 15. The main shaft 11 serves as a fastener, and the fastening bracket 12, the connecting rod 13, the swing rod 14, and the support plate 15 serve as movable members. One end of the connecting rod 13 is pivoted on the main shaft 11 by using an axis R1 as a center, and the other end thereof is slidably mounted on the fastening bracket 12. One end of the swing rod 14 is pivoted on the main shaft 11 by using an axis R2 as a center, and the other end thereof is pivoted on the fastening bracket 12. Pivot axes (R1 and R2) of the connecting rod 13 and the swing rod 14 on the main shaft 11 are spaced apart from each other and do not coincide with each other. One end of the support plate 15 is pivoted on the fastening bracket 12. The five moving pairs above are lower pairs. The support plate 15 has a guide groove, the connecting rod 13 has a guide shaft, and the guide groove is slidably disposed in the guide groove. The moving pair is a higher pair.

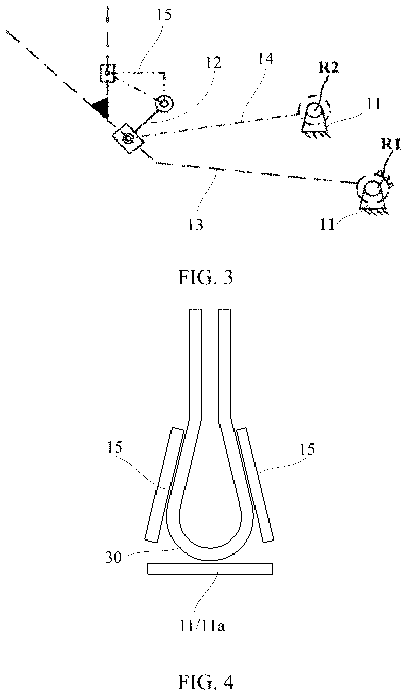

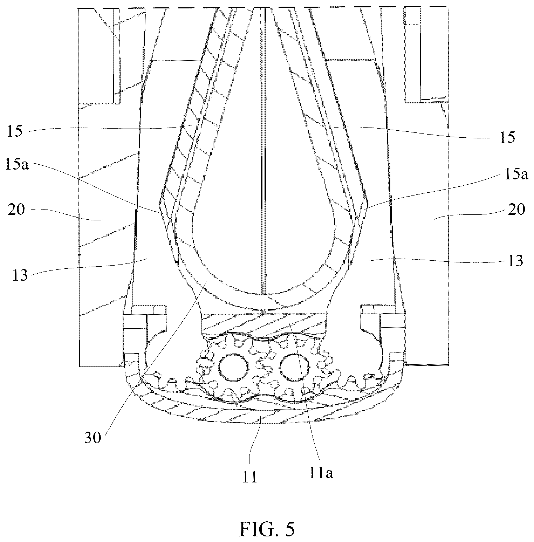

The fastening bracket 12 is configured to fasten to the housings 20 of the device. When the housings 20 of the device rotate relative to the main shaft 11, the fastening bracket 12 drives the connecting rod 13 and the swing rod 14 to rotate relative to the main shaft 11, and drives the support plate 15 to move. As shown in FIG. 4 and FIG. 5, in a folded state, display accommodating space is formed between support plates 15 located on two sides of a main shaft 11 and the main shaft 11, and the display accommodating space may accommodate a water drop-shaped part of a folded flexible display 30. As shown in FIG. 2, in an unfolded state, the support plates 15 located on the two sides of the main shaft 11 and the main shaft 11 jointly support a corresponding part of the unfolded flexible display 30. It may be understood that a main shaft support plate 11a is disposed on a surface of the main shaft 11, and the two support plates 15 and the main shaft support plate 11a jointly support a corresponding part of the unfolded flexible display 30. The hinge 10 in the related technology has a large quantity of parts, a complex structure, and low reliability, and requires high costs.

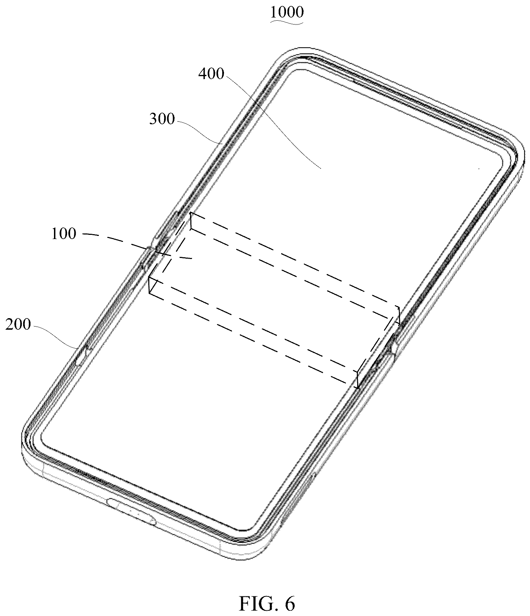

Refer to FIG. 6. An embodiment of this application provides a foldable device 1000. The foldable device 1000 may be a mobile phone, a tablet computer, a notebook computer, an ultra-mobile personal computer, an e-book reader, a netbook, a personal digital assistant, a smart wearable device (for example, a smartwatch), or the like.

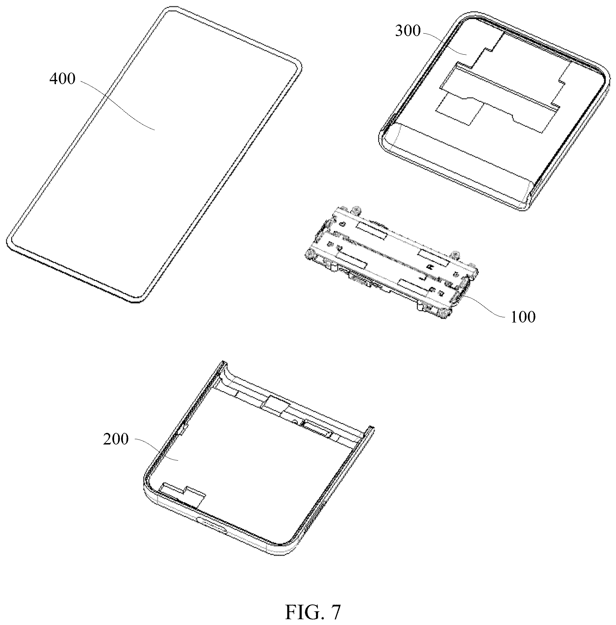

Refer to FIG. 6 and FIG. 7. The foldable device 1000 includes a hinge 100, a first housing 200, a second housing 300, and a flexible display 400. The pivot mechanism 100 is located between the first housing 200 and the second housing 300, and the first housing 200 and the second housing 300 are respectively connected to two opposite sides of the pivot mechanism 100. The flexible display 400 is fastened to the first housing 200 and the second housing 300. Devices such as a circuit board, a battery, a receiver, a speaker, and a camera may be mounted on the first housing 200 and the second housing 300. Devices such as a processor, a storage unit, and an antenna may be disposed on the circuit board.

The flexible display 400 may be configured to display an image and information, and can further input instructions and information. The flexible display 400 may be an organic light-emitting diode display, an active-matrix organic light-emitting diode display, a mini light-emitting diode display, a micro light-emitting diode display, a micro organic light-emitting diode display, a quantum dot light-emitting diode display, or the like.

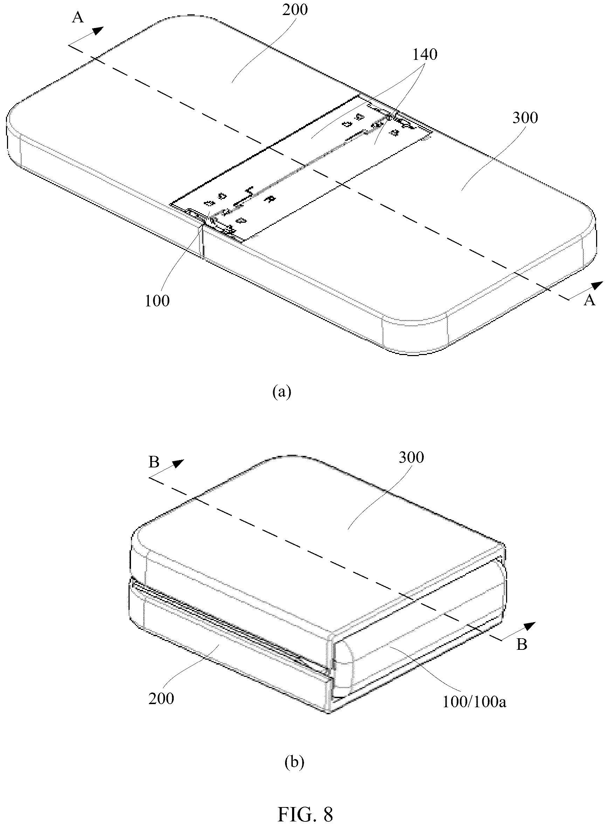

The hinge 100 has an unfolded state and a folded state. Refer to FIG. 6 and (a) in FIG. 8. When the hinge 100 is in the unfolded state, the first housing 200 and the second housing 300 are respectively arranged and unfolded on the two sides of the hinge 100, and the first housing 200 and the second housing 300 are approximately 180° apart (a deviation is allowed, for example, 178° or 182°). The flexible display 400 is unfolded and supported on the first housing 200, the hinge 100, and the second housing 300.

Refer to (b) in FIG. 8. When the hinge 100 is in the folded state, the first housing 200 and the second housing 300 are folded together to form a stacked structure, and the flexible display 400 is bent along with the first housing 200 and the second housing 300. The hinge 100 further has an intermediate state in a process of switching between the unfolded state and the folded state. The hinge 100 is switched between different states, to implement folding and unfolding of the foldable device 1000.

The foldable device 1000 may include one hinge 100 and one first housing 200 and one second housing 300 that are respectively connected to the two sides of the hinge 100. The first housing 200 and the second housing 300 are folded and unfolded by using the hinge 100. In addition, the foldable device 1000 may include at least two first housings 200, one second housing 300 is disposed between every two adjacent first housings 200, and one hinge 100 is connected between a first housing 200 and a second housing 300 that are adjacent. When the foldable device 1000 is folded, a stacked structure of at least three layers is formed.

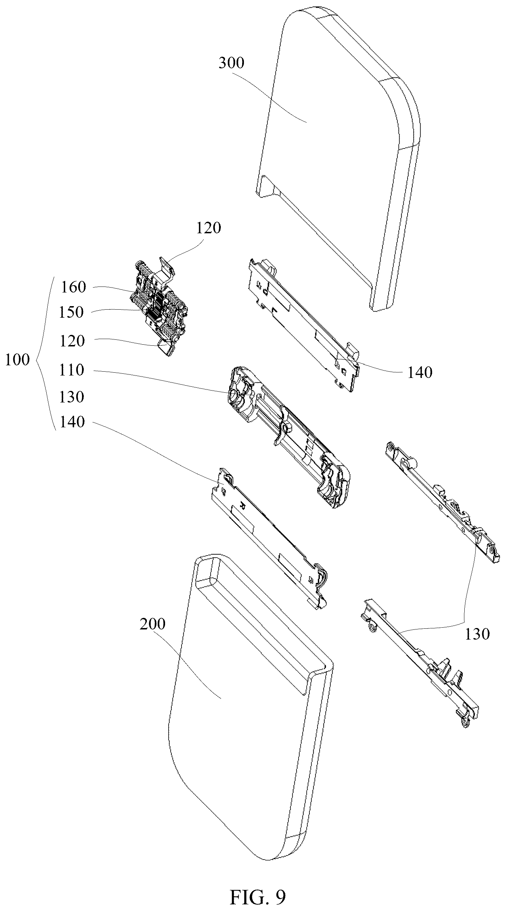

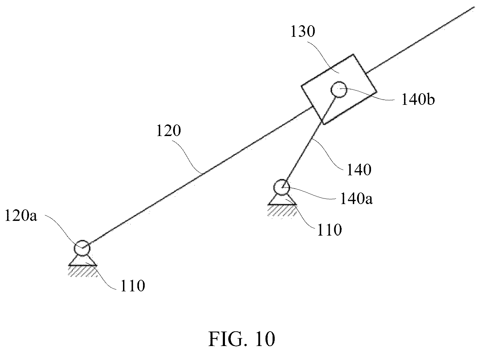

Refer to FIG. 9 to FIG. 13. An embodiment of this application provides a hinge 100, including a main shaft 110, a plurality of connecting rods 120, fastening brackets 130 arranged in pairs, and support plates 140 arranged in pairs. One or more connecting rods 120 are respectively disposed on two sides of the main shaft 110 along a direction perpendicular to an axial direction of the main shaft 110, and one end of each connecting rod 120 is pivoted on the main shaft 110 by using an axis 120a as a center. Each pair of the fastening brackets 130 is respectively disposed on the two sides of the main shaft 110 along the direction perpendicular to the axial direction of the main shaft 110. The fastening bracket 130 and the connecting rod 120 that are located on a same side of the main shaft 110 are correspondingly disposed, and the connecting rod 120 is slidably connected to the fastening bracket 130 corresponding to the connecting rod 120. Each pair of the support plates 140 is respectively disposed on the two sides of the main shaft 110 along the direction perpendicular to the axial direction of the main shaft 110, and the support plate 140 and the fastening bracket 130 that are located on a same side of the main shaft 110 are correspondingly disposed. One end of each support plate 140 is pivoted on the main shaft 110 by using an axis 140a as a center, and the other end thereof is pivoted on the fastening bracket 130 corresponding to the support plate 140 by using an axis 140b as a center. Pivot axes (120a, 140a), on the main shaft 110, of the connecting rod 120 and the support plate 140 that are located on a same side of the main shaft 110 are spaced apart from each other. With reference to FIG. 10, FIG. 14, and FIG. 15, the fastening brackets 130 located on the two sides of the main shaft 110 are capable of rotating relative to the main shaft 110, so that the hinge 100 switches between an unfolded state and a folded state. In a process in which the hinge 100 switches from the unfolded state to the folded state, the fastening brackets 130 located on the two sides of the main shaft 110 rotate toward each other, and the fastening brackets 130 drive the connecting rods 120 and the support plates 140 that correspond to the fastening brackets 130 to rotate, so that display accommodating space 101 is formed between the support plates 140 located on the two sides of the main shaft 110 and the main shaft 110.

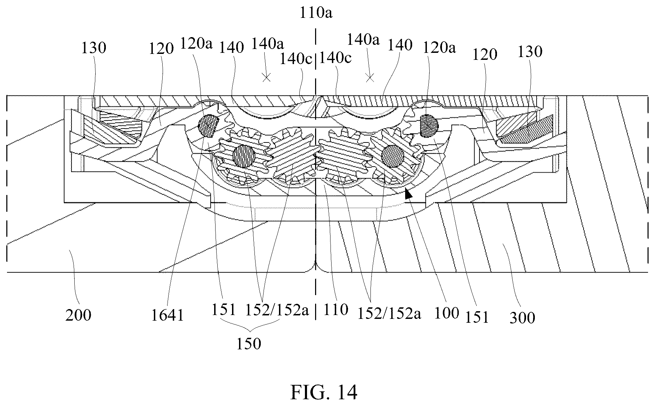

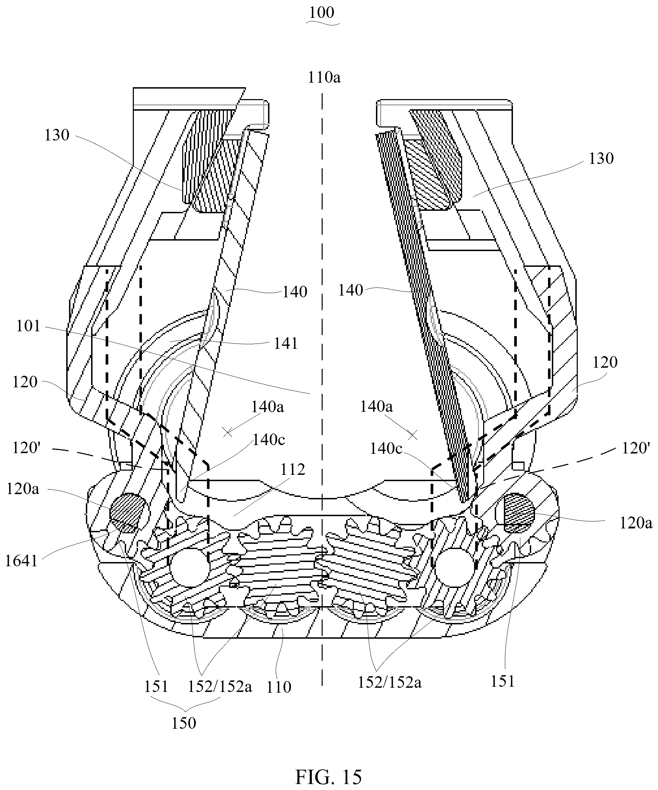

As shown in (a) in FIG. 8 and FIG. 14, the unfolded state of the hinge 100 is a form in which the support plates 140 located on the two sides of the main shaft 110 are roughly flush, and sides that are of the support plates 140 located on the two sides and that face a flexible display 400 may be approximately 180° apart (a deviation is allowed, for example, 178° or 182°). As shown in (b) in FIG. 8 and FIG. 15, the folded state of the hinge 100 means that the support plates 140 located on the two sides of the main shaft 110 are close to each other. It may be learned from FIG. 15 that the support plates 140 located on the two sides form a form with a narrow upper part and a wide lower part, and an acute angle may be formed between the support plates 140 located on the two sides of the main shaft 110.

That the fastening brackets 130 located on the two sides of the main shaft 110 rotate toward each other means that the fastening brackets 130 located on the two sides rotate relative to the main shaft 110, and a spacing between the fastening brackets 130 located on the two sides gradually decreases. In a process in which the hinge 100 switches from the unfolded state to the folded state, end parts 140c that are of the support plates 140 located on the two sides of the main shaft 110 and that are close to the main shaft 110 change from being close to each other to being gradually away from each other. For the hinge 100 in the folded state, the display accommodating space 101 that is approximately triangular is formed between the support plates 140 located on the two sides of the main shaft 110 and the main shaft 110, to accommodate a water drop-shaped bent part of the flexible display 400.

According to the hinge 100 provided in this embodiment of this application, with reference to FIG. 10, the main shaft 110 serves as a fastener, and the connecting rods 120, the fastening brackets 130, and the support plates 140 serve as movable members and jointly form a connecting rod sliding block mechanism. The connecting rod 120 is slidably mounted on the fastening bracket 130, the connecting rod 120 is pivoted on the main shaft 110, and two ends of the support plate 140 are pivoted on the main shaft 110 and the fastening bracket 130 respectively. When the fastening brackets 130 located on the two sides of the main shaft 110 rotate, the connecting rods 120 and the support plates 140 may be driven to rotate, to switch the hinge 100 between the unfolded state and the folded state. The connecting rod sliding block mechanism in the hinge 100 has only three movable members and four lower pairs in total, and does not require a higher pair, so that the connecting rod sliding block mechanism has a small quantity of parts, a simple structure, and high reliability, and requires low costs. With reference to FIG. 15, when the hinge 100 is switched to the folded state, the display accommodating space 101 is formed between the support plates 140 located on the two sides of the main shaft 110 and the main shaft 110, to accommodate a water drop-shaped bent part of the flexible display 400 when the flexible display 400 is folded.

Refer to FIG. 6, FIG. 7, and FIG. 14, when the hinge 100 is used in the foldable device 1000, the foldable device 1000 includes the hinge 100, the first housing 200, the second housing 300, and the flexible display 400. The hinge 100 is located between the first housing 200 and the second housing 300, a fastening bracket 130 located on one side of the main shaft 110 is fastened to the first housing 200, and a fastening bracket 130 located on the other side of the main shaft 110 is fastened to the second housing 300. Two end parts of the flexible display 400 are respectively fastened to the first housing 200 and the second housing 300, and a middle region of the flexible display 400 is disposed corresponding to the hinge 100.

The fastening bracket 130 may be connected to the first housing 200 (or the second housing 300) in a manner of bonding, clamping, a fastener (for example, a screw), or the like. The flexible display 400 may be connected to the first housing 200 (or the second housing 300) in a manner of bonding or the like. The flexible display 400 is not connected to the hinge 100. When the first housing 200 and the second housing 300 are folded, a corresponding region of the flexible display 400 is bent accordingly into a water drop shape.

When positions of the first housing 200 and the second housing 300 relative to the main shaft 110 in the hinge 100 are adjusted, positions of the fastening brackets 130 located on the two sides of the main shaft 110 relative to the main shaft 110 are adjusted. In a process in which the foldable device 1000 is gradually folded, the flexible display 400 is bent along with the first housing 200 and the second housing 300 until the hinge 100 is in the folded state, and a region that is of the flexible display 400 and that corresponds to the hinge 100 is bent to form a water drop shape. The water drop-shaped part may be accommodated in the display accommodating space 101 of the hinge 100 in the folded state. In a process in which the foldable device 1000 is gradually unfolded, the flexible display 400 is unfolded along with the first housing 200 and the second housing 300 until the hinge 100 is in the unfolded state, and the flexible display 400 is supported on the first housing 200, the hinge 100, and the second housing 300.

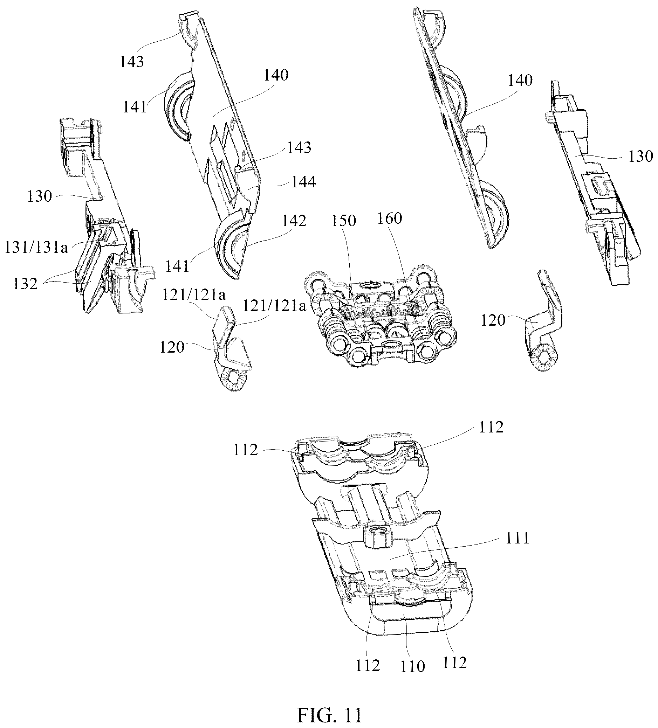

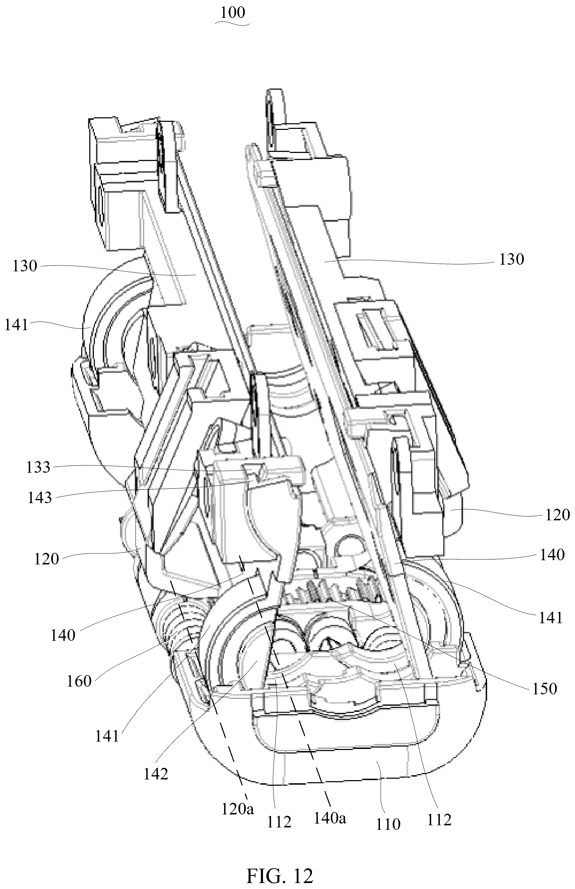

When the main shaft 110 is disposed, with reference to FIG. 11 and FIG. 12, the main shaft 110 serves as a fastener, and members such as the support plates 140 and the connecting rods 120 may be mounted on the main shaft 110. The main shaft 110 may be approximately of a flat strip shape. An accommodating groove 111 for mounting a related part may be provided on the main shaft 110, for example, mounting a synchronization assembly 150 and a damping assembly 160 that are mentioned later. An outer side surface of the main shaft 110 may be designed with an arc surface, to improve appearance effect of the hinge 100 when the hinge 100 is used in the foldable device 1000.

When the connecting rod 120 is disposed, with reference to FIG. 11 and FIG. 14, the connecting rod 120 may be configured as a straight rod or a rod member having a specific bending shape. For example, the connecting rod 120 is configured as a structure of at least three connecting segments, to meet a rotating connection between the connecting rod 120 and the main shaft 110 and a sliding connection between the connecting rod 120 and the fastening bracket 130. In a process of switching the hinge 100 between the unfolded state and the folded state, the connecting rod 120 does not interfere with another member. With reference to FIG. 15, when the hinge 100 is in the folded state, the connecting rods 120 located on the two sides of the main shaft 110 are located outside the two support plates 140, and no avoidance hole needs to be provided on the support plates 140.

When the fastening bracket 130 is disposed, the fastening bracket 130 may be strip-shaped or the like, and the fastening bracket 130 needs to be reliably fastened to the first housing 200 and the second housing 300, so that a sliding connection between the fastening bracket 130 and the connecting rod 120 and a rotating connection between the fastening bracket 130 and the support plate 140 can be implemented.

When the support plate 140 is disposed, the support plate 140 extends along the axial direction of the main shaft 110, so that the support plate 140 in an unfolded state can effectively support the flexible display 400. The support plate 140 may be approximately rectangle-shaped.

In some embodiments, with reference to FIG. 14, in a process in which the hinge 100 switches from the folded state to the unfolded state, the fastening brackets 130 located on the two sides of the main shaft 110 rotate away from each other, and the fastening brackets 130 drive the connecting rods 120 and the support plates 140 that correspond to the fastening brackets 130 to rotate, so that the support plates 140 located on the two sides of the main shaft 110 are flush and capable of covering one side of the main shaft 110. That the fastening brackets 130 located on the two sides of the main shaft 110 rotate away from each other means that the fastening brackets 130 located on the two sides rotate relative to the main shaft 110, and a spacing between the fastening brackets 130 located on the two sides gradually increases.

In a process in which the hinge 100 is gradually unfolded, a spacing between the end parts 140c that are of the support plates 140 located on the two sides of the main shaft 110 and that are close to the main shaft 110 gradually decreases. Until the hinge 100 is in the unfolded state, the end parts 140c that are of the support plates 140 located on the two sides and that are close to the main shaft 110 are close to each other, and the support plates 140 located on the two sides are flush and cover one side of the main shaft 110, so that the support plates 140 located on the two sides can support a corresponding region of the flexible display 400, and there is no need to dispose a main shaft support plate 11a on the main shaft 11 of the hinge 10 in the related technology shown in FIG. 2 to support the corresponding region of the flexible display. This can simplify a structure, and reduce production costs.

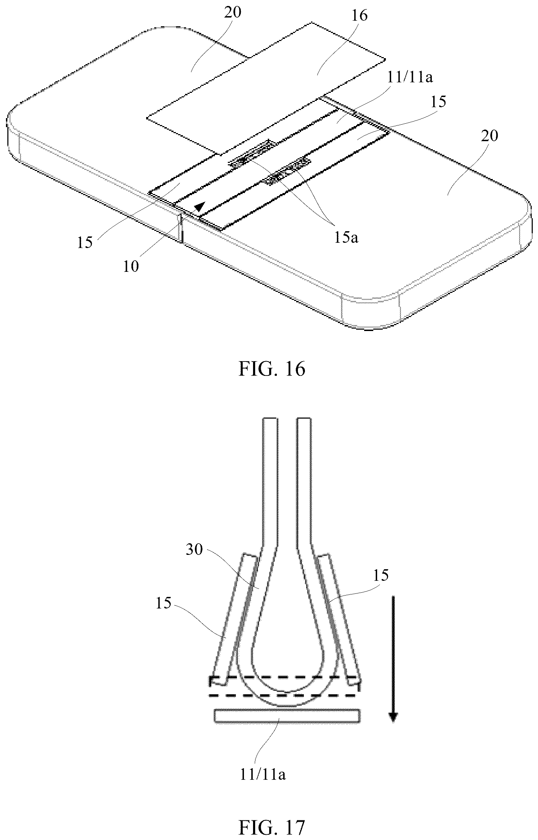

The foregoing describes the hinge 10 in the related technology. Refer to FIG. 5. In a process in which the support plate 15 moves relative to the main shaft 11, there is a motion trajectory overlap between the support plate 15 and the connecting rod 13. To avoid interference between the support plate 15 and the connecting rod 13, an avoidance hole 15a needs to be provided on the support plate 15 to avoid the connecting rod 13. With reference to FIG. 2, for the hinge 100 in the unfolded state, an avoidance hole 15a of the support plate 15 has poor support effect on the flexible display 30, and the flexible display 30 is prone to be dented or even damaged and fails. To avoid this problem, as shown in FIG. 16, in a related technology, a thin steel sheet 16 is disposed on a same side of the support plate 15 and the main shaft support plate 11a to cover the avoidance hole 15a; or as shown in FIG. 17, a lifting mechanism (not shown in the figure) is disposed on the main shaft 11 to implement a lifting motion of the main shaft support plate 11a. In the folded state, the main shaft support plate 11a goes down. In the unfolded state, the main shaft support plate 11a goes up to a position (shown by a dashed line position) flush with the support plates 15 located on the two sides. Both of these methods complicate the structure and manufacturing process and increase the costs.

In some embodiments of this application, with reference to FIG. 14 and FIG. 15, pivot axes 120a of the connecting rods 120 located on the two sides of the main shaft 110 are symmetrically disposed on two sides of pivot axes 140a of a pair of support plates 140 on the main shaft 110.

The connecting rods 120, the fastening brackets 130, and the support plates 140 that serve as the movable members are distributed on the two sides of the main shaft 110 along the direction perpendicular to the axial direction of the main shaft 110, and form a symmetric surface 110a on the main shaft 110. The pivot axes 140a of the support plates 140 located on the two sides on the main shaft 110 are disposed close to the symmetric surface 110a, and the pivot axes 120a of the connecting rods 120 located on the two sides on the main shaft 110 are disposed away from the symmetric surface 110a. No avoidance hole needs to be provided on the support plate 140 to avoid the connecting rod 120, so that the support plates 140 that are unfolded on the two sides can better support corresponding parts of the flexible display 400. This reduces a case in which the flexible display 400 is dented or even damaged and fails in an unfolded state because of existence of the avoidance hole on the support plate 140. A thin steel sheet or a lifting mechanism does not need to be disposed on the main shaft 110 to reduce a failure of the flexible display 400, so that reliability of the flexible display 400 is improved, and production costs are low.

Refer to FIG. 15. When the hinge 100 is in the folded state, if connecting rods 120' are located in a position indicated by a dashed line, a spacing between pivot axes of the connecting rods 120' located on the two sides of the main shaft 110 is less than or equal to a spacing between the support plates 140 that are arranged in pairs and that are close to the main shaft 110. To avoid interference between the connecting rod 120' and the support plate 140, an avoidance hole needs to be provided on the support plate 140. This may cause a case in which the flexible display in the unfolded state is dented or even damaged and fails.

In some embodiments of this application, with reference to FIG. 15, when the hinge 100 is in the folded state, the connecting rod 120 is located on a side that is of the support plate 140 corresponding to the connecting rod 120 and that is opposite to the display accommodating space 101, and a spacing between pivot axes 120a of the connecting rods 120 located on the two sides of the main shaft 110 is greater than a spacing between the support plates 140 that are arranged in pairs and that are close to the main shaft 110. The spacing between the support plates 140 that are arranged in pairs and that are close to the main shaft 110 is a spacing between the end parts 140c that are of the support plates 140 located on the two sides and that are close to the main shaft 110.

The spacing between the pivot axes 120a of the connecting rods 120 located on the two sides of the main shaft 110 is increased, so that the connecting rod 120 in the hinge 100 in the folded state is located on an outer side of the corresponding support plate 140 instead of a side close to the display accommodating space 101. The connecting rod 120 and the support plate 140 do not interfere with each other, and no avoidance hole needs to be provided on the support plate 140 to avoid the connecting rod 120. In this way, the support plates 140 that are unfolded on the two sides can better support the corresponding parts of the flexible display 400. This reduces a case in which the flexible display 400 is dented or even damaged and fails in an unfolded state because of existence of the avoidance hole on the support plate 140. A thin steel sheet or a lifting mechanism does not need to be disposed on the main shaft 110 to reduce a failure of the flexible display 400, so that reliability of the flexible display 400 is improved, and production costs are low.

For example, the pivot axes 120a of the connecting rods 120 located on the two sides of the main shaft 110 are respectively disposed close to two sides along the direction perpendicular to the axial direction of the main shaft 110, so that the spacing between the pivot axes 120a of the connecting rods 120 located on the two sides of the main shaft 110 is maximized, and a problem that an avoidance hole needs to be provided on the support plate 140 due to interference between the connecting rod 120 and the support plate 140 in the folded state is overcome. In addition, limited space of the main shaft 110 is fully utilized, and it is convenient to arrange other parts on the main shaft 110.

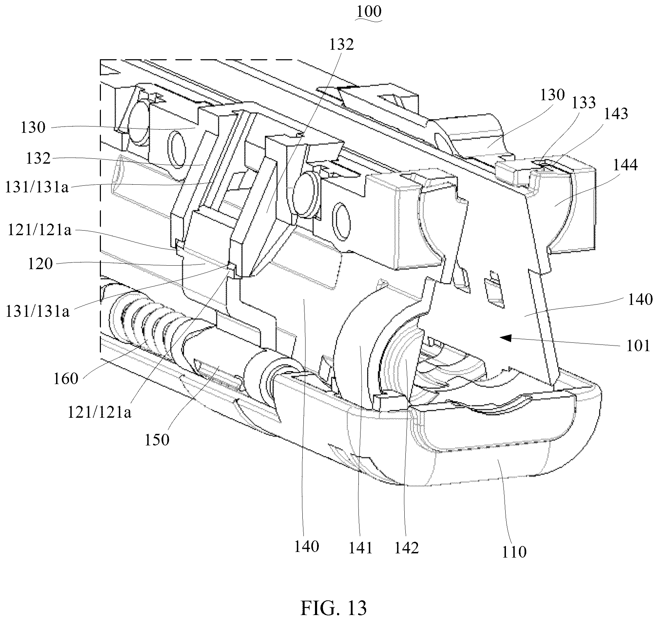

When the connecting rod 120 is pivoted on the main shaft 110, with reference to FIG. 13 to FIG. 15, the connecting rod 120 and the main shaft 110 may be in a pivot connection or a virtual axis connection, and both can implement the rotating connection between the connecting rod 120 and the main shaft 110.

The pivot connection means that a connecting shaft is disposed on one of two parts, a connecting hole is provided on the other part, the connecting shaft passes through the connecting hole, and the connecting shaft may rotate around an axis of the connecting hole, so that a rotating connection between the two parts can be implemented.

The virtual axis connection means that an arc arm is disposed on one of two parts, and an arc groove is provided on the other part, an axis of the arc arm coincides with an axis of the arc groove, and the arc arm can be slidably mounted in the arc groove, so that a rotating connection between the two parts can be implemented. The arc groove may be a quarter-arc groove, a one-third arc groove, a half-arc groove, or the like. The arc arm may be a quarter-arc arm, a one-third arc arm, a half-arc arm, or the like. Shapes and positions of the arc arm and the arc groove may be adjusted based on a requirement.

For example, a first rod 1641 is connected to the connecting rod 120, a bracket is mounted on the main shaft 110, the bracket has a connecting hole, and the first rod 1641 passes through the connecting hole of the bracket, to rotatably connect the connecting rod 120 to the main shaft 110.

When the fastening bracket 130 and the connecting rod 120 are in a sliding connection, with reference to FIG. 11 and FIG. 13, the fastening bracket 130 has a first sliding portion 131, the connecting rod 120 corresponding to the fastening bracket 130 has a second sliding portion 121, and the first sliding portion 131 and the second sliding portion 121 are in a sliding fit, so that the connecting rod 120 is slidably connected to the fastening bracket 130.

The first sliding portion 131 of the fastening bracket 130 and the second sliding portion 121 of the connecting rod 120 are in a sliding fit, so that the stable sliding connection between the fastening bracket 130 and the connecting rod 120 can be implemented. The first sliding portion 131 and the second sliding portion 121 are located on a side that is of the support plate 140 and that is opposite to the flexible display 400, so that the first sliding portion 131 and the second sliding portion 121 do not affect support of the support plate 140 for the flexible display 400 in the unfolded state, and do not affect formation of the display accommodating space 101 by the support plates 140 located on the two sides and the main shaft 110 in the folded state.

When the first sliding portion 131 and the second sliding portion 121 are disposed, with reference to FIG. 11 and FIG. 13, the first sliding portion 131 is a guide groove 131a provided on the fastening bracket 130, the second sliding portion 121 is a guide arm 121a disposed on the connecting rod 120, and the guide arm 121a is slidably mounted in the guide groove 131a. A manner of the guide groove 131a and the guide arm 121a is used, so that it is easy to form and assemble, and the stable and reliable sliding connection between the fastening bracket 130 and the connecting rod 120 can be implemented. The guide groove 131a may extend along a straight line, an arc, or the like.

For example, with reference to FIG. 11 and FIG. 13, the fastening bracket 130 has two oppositely disposed barrier walls 132, a guide groove 131a is provided on an opposite surface of each barrier wall 132, one end that is of the connecting rod 120 and that is away from the main shaft 110 may slide between the two barrier walls 132, and two opposite sides of the connecting rod 120 protrude to form guide arms 121a. The two guide arms 121a are slidably mounted in a one-to-one correspondence in the two guide grooves 131a, so that the connecting rod 120 can slide only along the guide grooves 131a, and a possibility that the connecting rod 120 is detached from the guide grooves 131a is reduced.

In addition, one barrier wall 132 may be disposed on the fastening bracket 130, a guide groove 131a is provided on the barrier wall 132, a guide arm 121a is disposed on the connecting rod 120, and the guide arm 121a is slidably mounted in the guide groove 131a. In this way, the sliding connection between the connecting rod 120 and the fastening bracket 130 can also be implemented.

In some other embodiments, the first sliding portion 131 is a guide arm disposed on the fastening bracket 130, the second sliding portion 121 is a guide groove provided on the connecting rod 120, and the guide arm is slidably mounted in the guide groove. In this way, the stable and reliable sliding connection between the fastening bracket 130 and the connecting rod 120 can also be implemented.

When the support plate 140 is pivoted on the main shaft 110, with reference to FIG. 11 to FIG. 13, the support plate 140 and the main shaft 110 may be in a virtual axis connection or a pivot connection, and both can implement a rotating connection between the support plate 140 and the main shaft 110.

In some embodiments, with reference to FIG. 11, FIG. 13, and FIG. 18, the support plate 140 and the main shaft 110 are in a virtual axis connection, each support plate 140 has one or more first arc arms 141, the main shaft 110 has one or more first arc grooves 112 corresponding to the one or more first arc arms 141, and the one or more first arc arms 141 are correspondingly slidably mounted in the one or more first arc grooves 112, so that the support plate 140 is pivoted on the main shaft 110.

The first arc arm 141 of the support plate 140 and the first arc groove 112 of the main shaft 110 are in a sliding fit, so that the stable and reliable rotating connection between the support plate 140 and the main shaft 110 can be implemented, a structure is simplified, and assembly is easy. The first arc arm 141 is located on the side that is of the support plate 140 and that is opposite to the flexible display 400, so that the first arc arm 141 does not affect support of the support plate 140 for the flexible display 400 in the unfolded state, and does not affect formation of the display accommodating space 101 by the support plates 140 located on the two sides and the main shaft 110 in the folded state.

When a plurality of first arc arms 141 are disposed on a same support plate 140, the plurality of first arc arms 141 may be spaced apart from each other on the support plate 140 along the axial direction of the main shaft 110, and a plurality of first arc grooves 112 are provided at corresponding positions of the main shaft 110, so that the rotating connection between the support plate 140 and the main shaft 110 can be better implemented.

For example, one first arc arm 141 is separately disposed on two ends of the support plate 140 in the axial direction of the main shaft 110, and one first arc groove 112 is separately provided on two ends of the main shaft 110, so that the stable rotating connection between the support plate 140 and the main shaft 110 can be implemented. More space may be reserved in a middle position of the main shaft 110 to assemble another part, for example, to mount the synchronization assembly 150 and the damping assembly 160 that are mentioned below on the main shaft 110.

When the first arc grooves 112 corresponding to the support plates 140 located on the two sides are provided on the main shaft 110, the first arc grooves 112 on the two sides of the main shaft 110 in the direction perpendicular to the axial direction of the main shaft 110 may be provided in a staggered manner along the axial direction of the main shaft 110. This facilitates formation of the first arc grooves 112 corresponding to the support plates 140 located on the two sides on the main shaft 110. Correspondingly, the first arc arms 141 of the support plates 140 located on the two sides are disposed in a staggered manner along the axial direction of the main shaft 110. In addition, the first arc grooves 112 on the two sides of the main shaft 110 along the direction perpendicular to the axial direction of the main shaft 110 may alternatively be provided opposite to each other.

When the first arc arm 141 is disposed, with reference to FIG. 11, FIG. 13, and FIG. 18, a first baffle plate 142 may be disposed at one end of the first arc arm 141, and a vacancy for accommodating the first baffle plate 142 may be disposed on the main shaft 110. The first baffle plate 142 is disposed, so that structural strength of the first arc arm 141 may be enhanced, and reliability is improved. In a process in which the first arc arm 141 slides relative to the first arc groove 112, a limiting function on the first arc arm 141 along the axial direction of the main shaft 110 may be formed, and a possibility that the support plate 140 is detached from the main shaft 110 when rotating relative to the main shaft 110 is reduced.

In some other embodiments, each support plate 140 has a first arc groove, the main shaft 110 has a first arc arm, and the first arc arm is slidably mounted in the first arc groove. In this way, the support plate 140 can also be pivoted on the main shaft 110.

When the support plate 140 is pivoted on the fastening bracket 130, with reference to FIG. 11 and FIG. 13, the support plate 140 and the fastening bracket 130 may be in a virtual axis connection or a pivot connection, and both can implement the rotating connection between the support plate 140 and the fastening bracket 130.

In some embodiments, with reference to FIG. 11, FIG. 12, and FIG. 18, the support plate 140 and the fastening bracket 130 are in a virtual axis connection, each support plate 140 has one or more second arc arms 143, the fastening bracket 130 has one or more second arc grooves 133 corresponding to the one or more second arc arms 143, and the one or more second arc arms 143 are correspondingly slidably mounted in the one or more second arc grooves 133, so that the support plate 140 is pivoted on the fastening bracket 130.

The second arc arm 143 of the support plate 140 and the second arc groove 133 of the fastening bracket 130 are in a sliding fit, so that the stable and reliable rotating connection between the support plate 140 and the fastening bracket 130 can be implemented, a structure is simplified, and assembly is easy. The second arc arm 143 and the second arc groove 133 are located on the side that is of the support plate 140 and that is opposite to the flexible display 400, so that the second arc arm 143 and the second arc groove 133 do not affect support of the support plate 140 for the flexible display 400 in the unfolded state, and do not affect formation of the display accommodating space 101 by the support plates 140 located on the two sides and the main shaft 110 in the folded state.

When a plurality of groups of second arc arms 143 and second arc grooves 133 are disposed, the plurality of second arc arms 143 may be spaced apart from each other on the support plate 140 along the axial direction of the main shaft 110, and the plurality of second arc grooves 133 are provided at corresponding positions of the fastening bracket 130, so that the rotating connection between the support plate 140 and the fastening bracket 130 can be better implemented.

For example, one second arc arm 143 is separately disposed on two ends of the support plate 140 in the axial direction of the main shaft 110, and one second arc groove 133 is provided on two ends of the fastening bracket 130 in the axial direction of the main shaft 110, so that the stable rotating connection between the support plate 140 and the fastening bracket 130 can be implemented. More space may be reserved in a middle position of the fastening bracket 130 to assemble another part, for example, to slidably mount the connecting rod 120 on the fastening bracket 130.

When the second arc arm 143 is disposed, with reference to FIG. 11, FIG. 12, and FIG. 18, a second baffle plate 144 may be disposed at one end of the second arc arm 143. The second baffle plate 144 is disposed, so that structural strength of the second arc arm 143 may be enhanced, and reliability is improved. In a process in which the second arc arm 143 slides relative to the second arc groove 133, a limiting function on the second arc arm 143 along the axial direction of the main shaft 110 may be formed, and a possibility that the support plate 140 is detached from the fastening bracket 130 when rotating relative to the fastening bracket 130 is reduced.

In some other embodiments, the fastening bracket 130 has a second arc groove, each support plate 140 has a second arc arm, and the second arc arm is slidably mounted in the second arc groove. In this way, the support plate 140 can also be pivoted on the fastening bracket 130.

To synchronously fold or unfold parts on the two sides of the main shaft 110 in a process of switching the hinge 100 between the folded state and the unfolded state, in some embodiments, with reference to FIG. 14 and FIG. 15, the hinge 100 further includes a synchronization assembly 150 disposed on the main shaft 110, configured to enable the connecting rods 120 located on the two sides of the main shaft 110 to rotate synchronously in opposite directions.

The synchronization assembly 150 is disposed, so that the connecting rods 120 located on the two sides of the main shaft 110 may move synchronously in opposite directions. The connecting rods 120, the fastening brackets 130, and the support plates 140 located on the two sides of the main shaft 110 form two sets of connecting rod sliding block mechanisms, and the two sets of connecting rod sliding block mechanisms move synchronously in opposite directions. That is, the parts on the two sides of the main shaft 110 can be folded or unfolded synchronously. When the hinge 100 is used in the foldable device 1000, the first housing 200 and the second housing 300 can be folded or unfolded synchronously, to improve user experience.

In some embodiments, with reference to FIG. 14 and FIG. 15, the synchronization assembly 150 includes first gears 151 that are correspondingly fastened to the connecting rods 120 located on the two sides of the main shaft 110, a pivot axis 120a of each connecting rod 120 coincides with an axis of the first gear 151 corresponding to the connecting rod 120, and the first gears 151 located on the two sides of the main shaft 110 are in a drive fit. The drive fit of the two first gears 151 may be direct meshing drive, or another gear is further disposed between the two first gears 151 for meshing drive.

When a position of the fastening bracket 130 on one side of the main shaft 110 relative to the main shaft 110 is adjusted, the corresponding connecting rod 120 and the corresponding support plate 140 move in a linkage manner. The connecting rod 120 rotates relative to the main shaft 110, and the connecting rod 120 on the other side of the main shaft 110 is driven, through the drive fit of the two first gears 151, to rotate relative to the main shaft 110 in an opposite direction, so that the corresponding fastening bracket 130 and the corresponding support plate 140 move in a linkage manner, and the parts on the two sides of the main shaft 110 can be folded or unfolded synchronously.

In some embodiments, with reference to FIG. 14 and FIG. 15, the synchronization assembly 150 includes the first gears 151 and further includes an even number of second gears 152 that are sequentially engaged, and the first gears 151 located on the two sides of the main shaft 110 are driven by the even number of second gears 152.

The even number of second gears 152 are disposed, so that synchronous folding or unfolding of the parts on the two sides of the main shaft 110 can be implemented, and the spacing between the pivot axes 120a of the connecting rods 120 located on the two sides of the main shaft 110 can be further increased. No avoidance hole needs to be provided on the support plate 140 to avoid the connecting rod 120, so that production costs are low, and reliability of the flexible display 400 is improved. The even number of second gears 152 may be two, four, or the like.

After the first gear 151 and the second gear 152 are disposed, an avoidance position used to avoid the first gear 151 may be disposed on an inner surface of the support plate 140, and an avoidance position used to avoid the second gear 152 may be disposed on an inner surface of the main shaft 110, so that the first gear 151 and the second gear 152 are assembled on the main shaft 110.

There are different implementations for disposing the second gear 152. In some embodiments, with reference to FIG. 14 and FIG. 15, the second gears 152 are all single gears 152a. The single gear 152a is a form in which one gear is disposed on one shaft. The spacing between the pivot axes of the connecting rods 120 located on the two sides of the main shaft 110 may be increased through a plurality of single gears 152a.

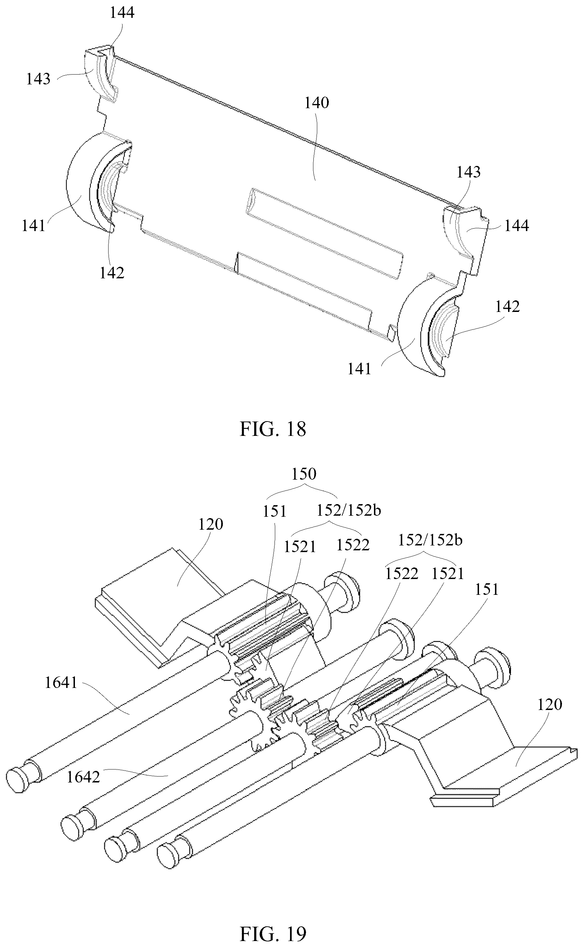

In some other embodiments, with reference to FIG. 19 to FIG. 21, two of the second gears 152 are a dual gear 152b. Each dual gear 152b includes a first tooth portion 1521 and a second tooth portion 1522 that are coaxially disposed. The first gears 151 located on the two sides of the main shaft 110 are correspondingly engaged with the first tooth portions 1521 of the dual gears 152b, and the second tooth portions 1522 of the two dual gears 152b are engaged with each other.

The dual gear 152b is a form in which two gears with different diameters are disposed on one shaft. Synchronous folding or unfolding of the parts on the two sides of the main shaft 110 may be implemented by using a small quantity of dual gears 152b, so that a reverse synchronous motion error is reduced, the spacing between the pivot axes of the connecting rods 120 located on the two sides of the main shaft 110 is increased, no avoidance hole needs to be provided on the support plate 140 to avoid the connecting rod 120, and reliability of the flexible display 400 is improved.

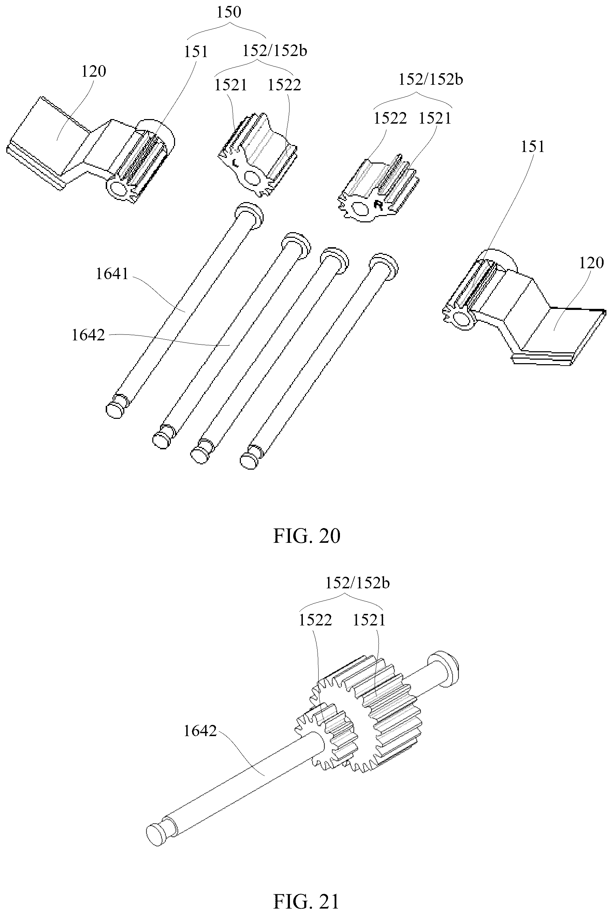

For example, two dual gears 152b are disposed between the two first gears 151, and a diameter of the first tooth portion 1521 is greater than that of the second tooth portion 1522 in the dual gear 152b. As shown in FIG. 19 and FIG. 21, the first tooth portion 1521 and the second tooth portion 1522 may be staggered in an axial direction. Alternatively, as shown in FIG. 20, the first tooth portion 1521 and the second tooth portion 1522 may coincide in an axial direction. In the two cases, both the first tooth portion 1521 and the second tooth portion 1522 may be set as incomplete gears. That is, there are convex teeth only in some regions, as long as a drive requirement is met.

In some other embodiments, the synchronization assembly 150 may alternatively be a belt drive mechanism. Two belt pulleys in the belt drive mechanism are correspondingly disposed on two connecting rods 120, an axis of the belt pulley coincides with a pivot axis of the connecting rod 120, a drive belt is wound around the two belt pulleys, and the drive belt is 8-shaped. Synchronous folding or unfolding of the connecting rods 120 located on the two sides of the main shaft 110 is implemented by using the belt drive mechanism.

To enable the hinge 100 to have damping effect in a process of switching between the folded state and the unfolded state, in some embodiments, with reference to FIG. 11 and FIG. 12, the hinge 100 further includes a damping assembly 160 mounted on the main shaft 110. When the connecting rod 120 rotates relative to the main shaft 110, the damping assembly 160 is configured to provide a damping force for the connecting rod 120.

The damping assembly 160 is disposed to provide a damping force for the connecting rod 120, so that a movable member linked with the connecting rod 120 has damping effect. When components on the two sides of the main shaft 110 are in a folded state, an unfolded state, or an intermediate state, an external force is needed to change positions of the components on the two sides of the main shaft 110. When the hinge 100 is used in the foldable device 1000, an external force is needed to adjust relative positions of the first housing 200 and the second housing 300, and the first housing 200 and the second housing 300 cannot freely rotate relative to each other when there is no external force.

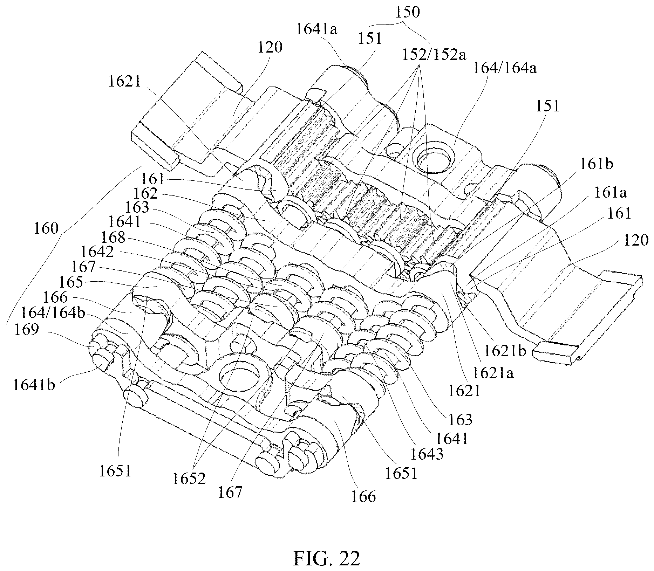

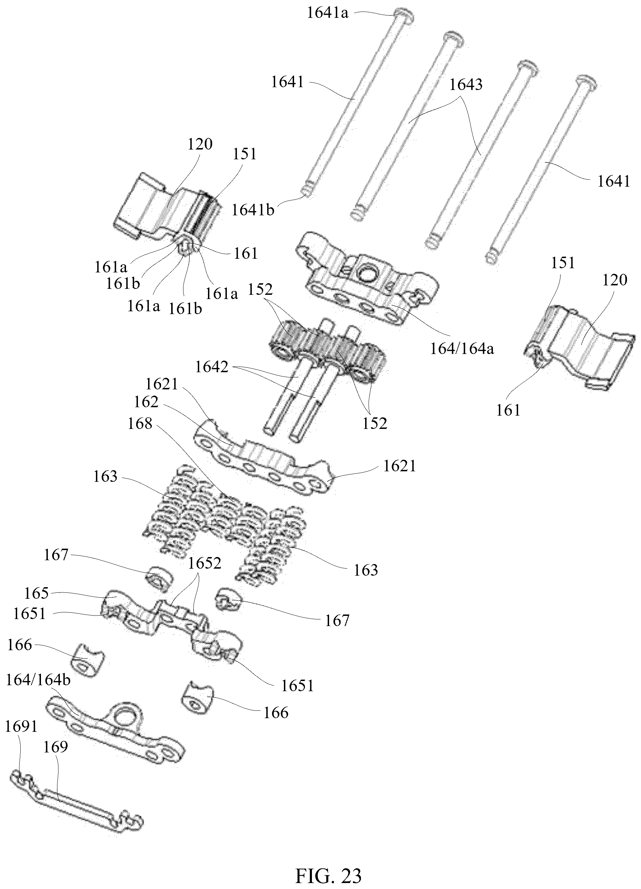

In some embodiments, with reference to FIG. 22 and FIG. 23, end parts of the plurality of first gears 151 have first cam portions 161. The damping assembly 160 includes a first one-piece cam 162 and a first elastic member 163. The first one-piece cam 162 is capable of moving in an axial direction of the first gear 151 relative to the first cam portion 161, and the first one-piece cam 162 has a second cam portion 1621 that is capable of being correspondingly engaged with the first cam portion 161. The first elastic member 163 is capable of acting on the first one-piece cam 162 to press the second cam portion 1621 against the first cam portion 161.

The first cam portion 161 and the second cam portion 1621 have a same structure. The first cam portion 161 is used as an example. Each first cam portion 161 has protrusion portions 161a and recess portions 161b that are alternately distributed along a circumferential direction. When the protrusion portion 161a of the first cam portion 161 correspondingly slides into a recess portion 1621b of the second cam portion 1621, a protrusion portion 1621a of the second cam portion 1621 also correspondingly slides into the recess portion 161b of the first cam portion 161. That is, the first cam portion 161 and the second cam portion 1621 are engaged. Each protrusion portion of the first cam portion 161 and the second cam portion 1621 has a top surface and two opposite side surfaces, and the side surface of the protrusion portion may be an oblique surface.

The first elastic member 163 may be a spring or another elastic member. One or more first elastic members 163 may be configured to change a damping force between matching cam portions.

Under an action of the first elastic member 163, the second cam portion 1621 keeps being pressed against the first cam portion 161. When the connecting rod 120 rotates relative to the main shaft 110, the first cam portion 161 on the first gear 151 rotates relative to the second cam portion 1621 of the first one-piece cam 162. When the top surface of the protrusion portion 161a of the first cam portion 161 abuts against the top surface of the protrusion portion 1621a of the second cam portion 1621, a compression amount of the first elastic member 163 is large, and a large damping force is formed between the first cam portion 161 and the second cam portion 1621. When the protrusion portion 161a of the first cam portion 161 slides into the recess portion 1621b of the second cam portion 1621, the first elastic member 163 is compressed, a specific damping force is generated between the first cam portion 161 and the second cam portion 1621, and the first cam portion 161 and the second cam portion 1621 are kept engaged. In this case, the connecting rod 120 and the main shaft 110 are kept relatively static, so that the folded state or the unfolded state of the hinge 100 can be implemented.

When the hinge 100 switches from the intermediate state to the unfolded state or the folded state, the protrusion portion 161a of the first cam portion 161 tends to slide into the recess portion 1621b of the second cam portion 1621, and the side surface of the protrusion portion 161a of the first cam portion 161 is correspondingly in contact with the side surface of the protrusion portion 1621a of the second cam portion 1621 to generate a small damping force. Under the action of the first elastic member 163, the first cam portion 161 continues to rotate, so that the protrusion portion 161a of the first cam portion 161 slides into the recess portion 1621b of the second cam portion 1621. That is, the first cam portion 161 and the second cam portion 1621 are engaged, to implement a self-unfolding or self-closing motion of the connecting rod 120 relative to the main shaft 110, and implement self-unfolding of the foldable device 1000 when the foldable device 1000 is close to the unfolded state or self-closing of the foldable device 1000 when the foldable device 1000 is close to the folded state.

A quantity of protrusion portions 161a of the first cam portion 161 and a quantity of protrusion portions 1621a of the second cam portion 1621 may be equal, and a specific quantity is not limited. For example, there are three protrusion portions 161a and three recess portions 161b of the first cam portion 161, and there are three protrusion portions 1621a and three recess portions 1621b of the second cam portion 1621. Under the action of the first elastic member 163, the first cam portion 161 cooperates with the second cam portion 1621 to provide a damping force for the connecting rod 120, and a self-unfolding or self-closing motion of the connecting rod 120 relative to the main shaft 110 is implemented.

In some embodiments, with reference to FIG. 11, FIG. 22, and FIG. 23, the damping assembly 160 further includes a bracket 164 and a first rod 1641 that is coaxially connected to the first gear 151 correspondingly. The bracket 164 is fastened to the main shaft 110. Two ends of the first rod 1641 are mounted on the bracket 164, and the first one-piece cam 162 is slidably mounted on the first rod 1641.

The first rod 1641 is mounted on the bracket 164, and the bracket 164 is fastened to the main shaft 110, so that the first one-piece cam 162 moves in an extension direction of the first rod 1641. Under the action of the first elastic member 163, the second cam portion 1621 of the first one-piece cam 162 is pressed against the first cam portion 161 on the connecting rod 120. The structure is simple and reliable in operation. The bracket 164 may be fastened to the main shaft 110 in a manner of bonding, a fastener (for example, a screw), or the like, or the bracket 164 and the main shaft 110 are an integrated structure.

In some embodiments, the bracket 164 includes a first bracket 164a and a second bracket 164b that are distributed on two sides of the first gear 151 along the axial direction of the first gear 151. The first rod 1641 and the first gear 151 may be connected in a synchronous rotation manner or integrally formed. The first rod 1641 passes through the first bracket 164a, the first one-piece cam 162, and the second bracket 164b. The first rod 1641 has a head 1641a and a clamping connector 1641b that are disposed opposite to each other. The head 1641a of the first rod 1641 is clamped outside the first bracket 164a, and the clamping connector 1641b of the first rod 1641 is limited outside the second bracket 164b in a manner of being cooperated with a limiting member 169. Sizes of the head 1641a of the first rod 1641 and the limiting member 169 are greater than a size of a hole in the bracket 164 for the first rod 1641 to pass through, so that the first rod 1641 is mounted on the first bracket 164a and the second bracket 164b in a limiting manner along the axial direction. The first bracket 164a and the second bracket 164b may be independent structures or an integrated structure.

When the first rod 1641 and the limiting member 169 are assembled, an end that is of the first rod 1641 that has the clamping connector 1641b passes through the bracket 164, and the clamping connector 1641b is in a clamping fit with a clamping slot 1691 of the limiting member 169. Under the action of the first elastic member 163, the first rod 1641 can be limited on the bracket 164 along the axial direction, so that the first rod 1641 does not move in the axial direction, and reliability is improved. The clamping connector 1641b may be in a T shape or another shape. The limiting member 169 may have a plurality of clamping slots 1691, to implement a corresponding clamping fit between clamping connectors 1641b of a plurality of first rods 1641 and the plurality of clamping slots 1691, thereby simplifying a structure.

There is an optional implementation when the first one-piece cam 162 and the first elastic member 163 are configured.

Refer to FIG. 22 and FIG. 23. In a first manner, the first one-piece cam 162 and the first elastic member 163 are disposed on a single side of the first gear 151. There is one first one-piece cam 162 and one first elastic member 163, and each first gear 151 has one first cam portion 161.

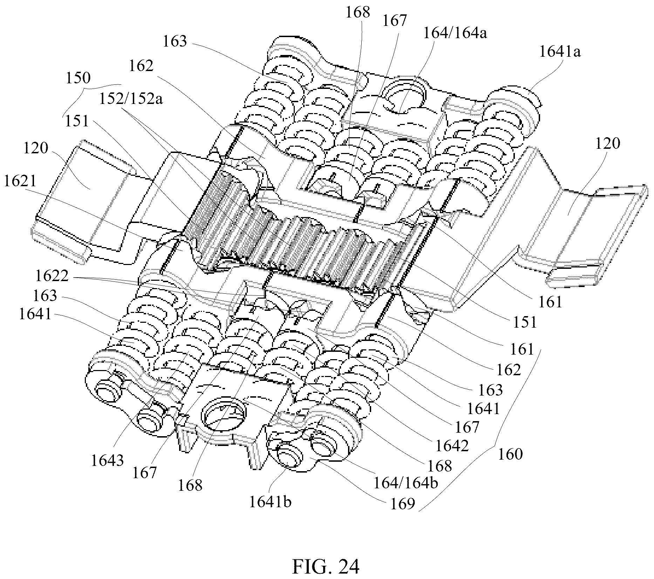

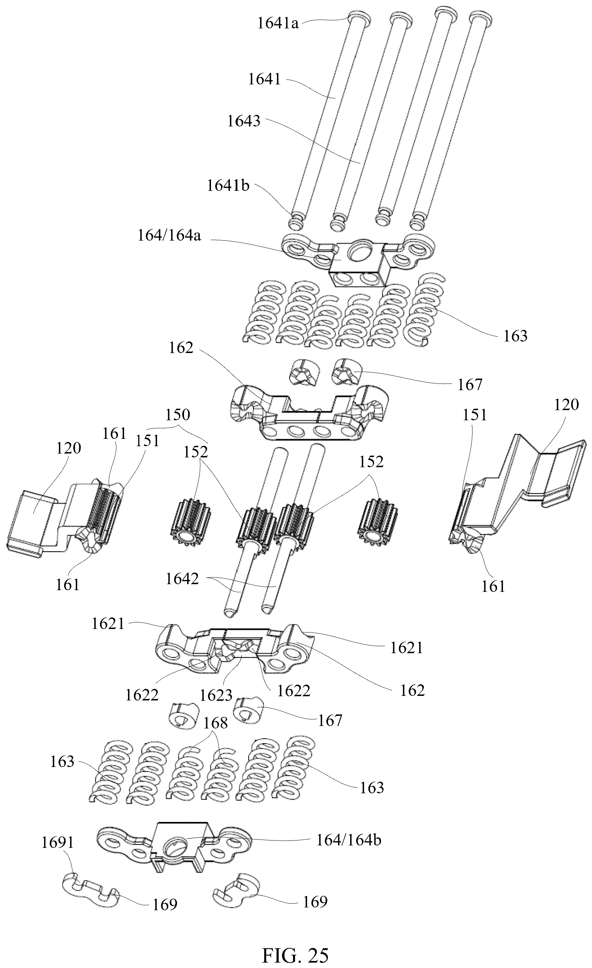

Refer to FIG. 24 and FIG. 25. In a second manner, the first one-piece cam 162 and the first elastic member 163 are separately disposed on two sides of the first gear 151. There are two first one-piece cams 162 and two first elastic members 163, each first gear 151 has two first cam portions 161 distributed in a back-to-back manner, and a set of the first one-piece cam 162 and the first elastic member 163 is separately disposed on two sides of the first gear 151 in the axial direction.

In both the foregoing two manners, the second cam portion 1621 of the first one-piece cam 162 can be pressed against the corresponding first cam portion 161, thereby implementing damping effect when the hinge 100 switches between the folded state and the unfolded state. When two sets of the first one-piece cam 162 and the first elastic member 163 are configured, the damping force of the hinge 100 when switching between the folded state and the unfolded state may be increased in the limited space.

To enable the hinge 100 to be used in a scenario with a space limitation and meet damping effect when the hinge 100 switches between the folded state and the unfolded state, in some embodiments, with reference to FIG. 22 and FIG. 23, the damping mechanism further includes a second one-piece cam 165 and a single cam 166 correspondingly spaced apart from the first cam portion 161. The second one-piece cam 165 is slidably mounted on the first rod 1641, and the single cam 166 is connected to the first rod 1641 in a synchronous rotation manner. The second one-piece cam 165 has a third cam portion 1651 that is capable of being correspondingly engaged with the single cam 166. The first elastic member 163 is disposed between the first one-piece cam 162 and the second one-piece cam 165 in a compressed manner, the first elastic member 163 is sleeved outside the first rod 1641, and the first elastic member 163 is capable of acting on the second one-piece cam 165 to press the third cam portion 1651 against the single cam 166.

The single cam 166 and the third cam portion 1651 of the second one-piece cam 165 have a structure similar to that of the first cam portion 161. That is, both the single cam 166 and the third cam portion 1651 have protrusion portions and recess portions that are alternately distributed along a circumferential direction.

The single cam 166 is connected to the first rod 1641 in a synchronous rotation manner, and the connection may be a profile connection or a key connection. When a profile connection is used, the first rod 1641 has a non-circular cross section (for example, D-shaped or square), and the single cam 166 has a hole with a matching non-circular cross section. When the first rod 1641 passes through the hole of the single cam 166, a synchronous rotation connection is formed between the first rod 1641 and the single cam 166.

Rotation of the first gear 151 is transferred to the single cam 166 through the first rod 1641. That is, the single cam 166 and the first gear 151 rotate synchronously. A cooperation relationship and a working process of the third cam portion 1651 of the second one-piece cam 165 and the single cam 166 are similar to a cooperation relationship and a working process of the second cam portion 1621 of the first one-piece cam 162 and the first cam portion 161. In small space, the second one-piece cam 165 and the single cam 166 are additionally disposed, so that a damping force of the hinge 100 is increased when the hinge 100 switches between the folded state and the unfolded state, surface wear of matching cams is reduced, and a service life of the device is prolonged.

Under the action of the first elastic member 163, the third cam portion 1651 keeps being pressed against the single cam 166, and the single cam 166 is limited by the bracket 164. When the connecting rod 120 rotates relative to the main shaft 110, the first gear 151 drives, through the first rod 1641, the single cam 166 to rotate relative to the third cam portion 1651 of the second one-piece cam 165. When the top surface of the protrusion portion of the single cam 166 abuts against the top surface of the protrusion portion of the third cam portion 1651, a large damping force is formed between the single cam 166 and the third cam portion 1651. When the protrusion portion of the single cam 166 slides into the recess portion of the third cam portion 1651, the first elastic member 163 is compressed, a specific damping force is generated between the single cam 166 and the third cam portion 1651, and the single cam 166 and the third cam portion 1651 are kept engaged. In this case, the connecting rod 120 and the main shaft 110 are kept relatively static, so that the folded state or the unfolded state of the hinge 100 can be implemented.

When the hinge 100 switches from the intermediate state to the unfolded state or the folded state, the protrusion portion of the single cam 166 tends to slide into the recess portion of the third cam portion 1651, and the side surface of the protrusion portion of the single cam 166 is correspondingly in contact with the side surface of the protrusion portion of the third cam portion 1651 to generate a small damping force. Under the action of the first elastic member 163, the single cam 166 continues to rotate, so that the protrusion portion of the single cam 166 slides into the recess portion of the third cam portion 1651. That is, the single cam 166 and the third cam portion 1651 are engaged, to implement a self-unfolding or self-closing motion of the connecting rod 120 relative to the main shaft 110, and implement self-unfolding of the foldable device 1000 when the foldable device 1000 is close to the unfolded state or self-closing of the foldable device 1000 when the foldable device 1000 is close to the folded state.

A quantity of protrusion portions of the third cam portion 1651 and a quantity of protrusion portions of the single cam 166 may be equal, and a specific quantity is not limited. For example, there are three protrusion portions and three recess portions of the third cam portion 1651, and there are three protrusion portions and three recess portions of the single cam 166. Under the action of the first elastic member 163, the third cam portion 1651 cooperates with the single cam 166 to provide a damping force for the connecting rod 120, and a self-unfolding or self-closing motion of the connecting rod 120 relative to the main shaft 110 is implemented.

Because the bracket 164 is fastened to the main shaft 110, the first rod 1641 is mounted on the bracket 164, and the first elastic member 163 is disposed between the first one-piece cam 162 and the second one-piece cam 165 in a compressed manner and sleeved outside the first rod 1641, all other devices of the damping assembly 160 except the bracket 164 are limited along the extension direction of the first rod 1641. The first rod 1641 does not move in the axial direction in a process of switching the hinge 100 between the unfolded state and the folded state, and reliability is high.

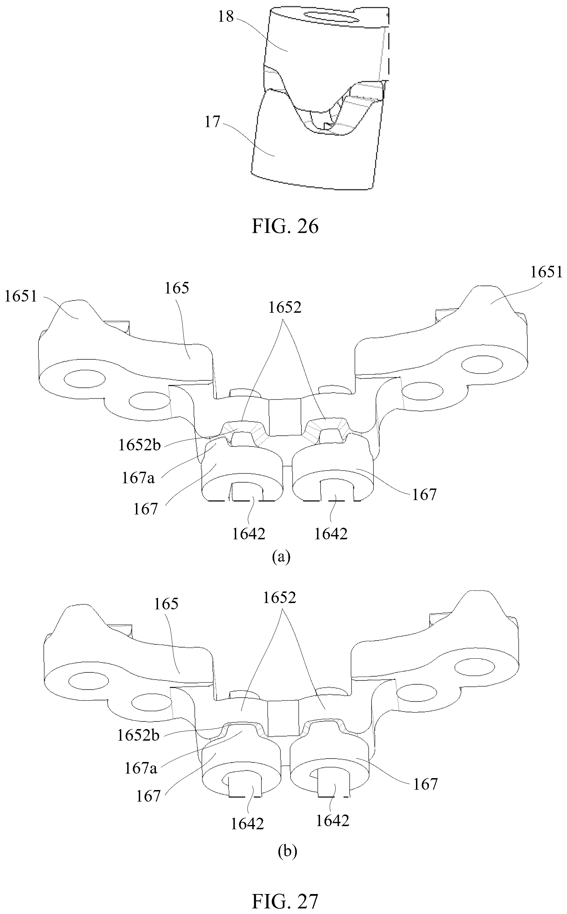

Refer to FIG. 5 and FIG. 26. In the foregoing hinge 10 in the related technology, when hover effect is implemented, a first cam 17 is disposed on the connecting rod 13, a second cam 18 is pressed against the first cam 17 by using an elastic member (not shown in the figure), a side surface of a protrusion portion of the first cam 17 and a side surface of a protrusion portion of the second cam 18 are pressed to provide a damping force, and the first cam 17 and the second cam 18 tend to be engaged with each other under the action of the elastic member, to implement hover effect of the connecting rod 13 relative to the main shaft 11.

To enable the hinge 100 in the intermediate state to implement reliable hover effect at a predetermined position, for example, when the hinge 100 is used in the foldable device 1000, the first housing 200 and the second housing 300 are kept at positions with an included angle like 90° or 120°, the hinge 100 in this application has different implementations.

A first implementation for implementing hovering is as follows: Refer to FIG. 22 and FIG. 23. The damping assembly 160 further includes a hover cam 167, a second elastic member 168, and a second rod 1642. The second gear 152 and the hover cam 167 are separately connected to the second rod 1642 in a synchronous rotation manner. The second one-piece cam 165 has a fourth cam portion 1652 in a position corresponding to at least one of the second gears 152, and the fourth cam portion 1652 is capable of being correspondingly engaged with the hover cam 167. The second elastic member 168 is disposed between the first one-piece cam 162 and the hover cam 167 in a compressed manner, the second elastic member 168 is sleeved outside the second rod 1642, and the second elastic member 168 is capable of acting on the hover cam 167 to press the hover cam 167 against the fourth cam portion 1652.

The hover cam 167 and the fourth cam portion 1652 have a structure similar to that of the first cam portion 161. That is, both the hover cam 167 and the fourth cam portion 1652 have protrusion portions and recess portions that are alternately distributed along a circumferential direction. A quantity of protrusion portions and a quantity of recess portions may be different from those on the first cam portion 161.

The second gear 152 and the hover cam 167 are separately connected to the second rod 1642 in a synchronous rotation manner, and the connection may be a profile connection or a key connection. The second gear 152 and the second rod 1642 may be of an integrated structure. Two ends of the second rod 1642 may be rotatably mounted on the bracket 164.

The second elastic member 168 may be a spring or another elastic member. One or more second elastic members 168 may be configured to change a damping force between matching cam portions.

Rotation of the second gear 152 is transferred to the hover cam 167 through the second rod 1642. That is, the hover cam 167 and the second gear 152 rotate synchronously. Under an action of the second elastic member 168, the hover cam 167 keeps being pressed against the fourth cam portion 1652. When the connecting rod 120 rotates relative to the main shaft 110, the first gear 151 and the second gear 152 rotate, and the second gear 152 drives, through the second rod 1642, the hover cam 167 to rotate relative to the fourth cam portion 1652 of the second one-piece cam 165. When the connecting rod 120 rotates to a predetermined angle position, with reference to (a) and (b) in FIG. 27, when a protrusion portion 167a of the hover cam 167 correspondingly slides into a recess portion 1652b of the fourth cam portion 1652, the second elastic member 168 is compressed, a specific damping force is generated between the hover cam 167 and the fourth cam portion 1652, and the hover cam 167 and the fourth cam portion 1652 are kept engaged. In this case, the connecting rod 120 and the main shaft 110 are kept relatively static, so that the hinge 100 can implement reliable hover effect at a predetermined position, and wear between the matching cams can be reduced.

A quantity of hover cams 167 and a quantity of fourth cam portions 1652 on the second one-piece cam 165 are adjusted, to change the damping force when the hover effect is implemented. For example, with reference to FIG. 22 and FIG. 23, a hover cam 167, a second elastic member 168, and a second rod 1642 are separately disposed on two of the second gears 152 correspondingly, and two fourth cam portions 1652 are correspondingly disposed on the second one-piece cam 165, so that a damping force required for the hover effect can be better provided.

Relative positions of the protrusion portion of the hover cam 167 and the protrusion portion of the fourth cam portion 1652 are adjusted, to change a specific position of the hinge 100 when the hover effect is implemented. A quantity of protrusion portions of the hover cam 167 and a quantity of protrusion portions of the fourth cam portion 1652 may be equal, and a specific quantity is not limited. For example, there are two protrusion portions and two recess portions of the hover cam 167, and there are two protrusion portions and two recess portions of the fourth cam portion 1652. Under the action of the second elastic member 168, the hover cam 167 cooperates with the fourth cam portion 1652 to provide a damping force for implementing the hover effect, thereby keeping the hinge 100 at a predetermined position.

When at least two second gears 152 are configured, the other second gears 152 may be separately connected to a third rod 1643. The third rod 1643 may be mounted on the bracket 164 similar to the first rod 1641. The first elastic member 163 may be sleeved outside the third rod 1643, so that the first elastic member 163 is disposed between the first one-piece cam 162 and the second one-piece cam 165 in a compressed manner, to increase a pushing force for the one-piece cams and further increase a damping force between the matching cams.

When the third cam portion 1651 and the fourth cam portion 1652 on the second one-piece cam 165 are disposed, the third cam portion 1651 and the fourth cam portion 1652 may be respectively disposed on two opposite sides of the second one-piece cam 165. The single cam 166 cooperates with the third cam portion 1651 under the action of the first elastic member 163, the fourth cam portion 1652 cooperates with the hover cam 167 under the action of the second elastic member 168, and the single cam 166 is limited by the bracket 164, to generate a damping force between the matching cam portions. In addition, the third cam portion 1651 and the fourth cam portion 1652 may be disposed on a same side of the second one-piece cam 165.

A second implementation for implementing hovering is as follows: Refer to FIG. 24 and FIG. 25. The damping assembly 160 further includes a hover cam 167, a second elastic member 168, and a second rod 1642. The second gear 152 and the hover cam 167 are separately connected to the second rod 1642 in a synchronous rotation manner. The first one-piece cam 162 has a fifth cam portion 1622 in a position corresponding to at least one of the second gears 152, and the fifth cam portion 1622 is capable of being correspondingly engaged with the hover cam 167. The second elastic member 168 is disposed between the bracket 164 and the hover cam 167 in a compressed manner, the second elastic member 168 is sleeved outside the second rod 1642, and the second elastic member 168 is capable of acting on the hover cam 167 to press the hover cam 167 against the fifth cam portion 1622.

The hover cam 167 and the fifth cam portion 1622 have a structure similar to that of the first cam portion 161. That is, both the hover cam 167 and the fifth cam portion 1622 have protrusion portions and recess portions that are alternately distributed along a circumferential direction. A quantity of protrusion portions and a quantity of recess portions may be different from those on the first cam portion 161.

The second gear 152 and the hover cam 167 are separately connected to the second rod 1642 in a synchronous rotation manner, and the connection may be a profile connection or a key connection. The second gear 152 and the second rod 1642 may be of an integrated structure. Two ends of the second rod 1642 may be rotatably mounted on the bracket 164.

The second elastic member 168 may be a spring or another elastic member. One or more second elastic members 168 may be configured to change a damping force between matching cam portions.

Rotation of the second gear 152 is transferred to the hover cam 167 through the second rod 1642. That is, the hover cam 167 and the second gear 152 rotate synchronously. Under the action of the second elastic member 168, the hover cam 167 keeps being pressed against the fifth cam portion 1622. When the connecting rod 120 rotates relative to the main shaft 110, the first gear 151 and the second gear 152 rotate, and the second gear 152 drives, through the second rod 1642, the hover cam 167 to rotate relative to the fifth cam portion 1622 of the second one-piece cam 165. When the connecting rod 120 rotates to a predetermined angle position, and a protrusion portion of the hover cam 167 correspondingly slides into a recess portion of the fifth cam portion 1622, the second elastic member 168 is compressed, a specific damping force is generated between the hover cam 167 and the fifth cam portion 1622, and the hover cam 167 and the fifth cam portion 1622 are kept engaged. In this case, the connecting rod 120 and the main shaft 110 are kept relatively static, so that the hinge 100 can implement reliable hover effect at a predetermined position, and wear between matching cams can be reduced.

A quantity of hover cams 167 and a quantity of fifth cam portions 1622 on the second one-piece cam 165 are adjusted, to change the damping force when the hover effect is implemented. For example, with reference to FIG. 24 and FIG. 25, a hover cam 167, a second elastic member 168, and a second rod 1642 are separately disposed on two of the second gears 152 correspondingly, and two fifth cam portions 1622 are correspondingly disposed on the second one-piece cam 165, so that a damping force required for the hover effect can be better provided.

Relative positions of the protrusion portion of the hover cam 167 and the protrusion portion of the fifth cam portion 1622 are adjusted, to change a specific position of the hinge 100 when the hover effect is implemented. A quantity of protrusion portions of the hover cam 167 and a quantity of protrusion portions of the fifth cam portion 1622 may be equal, and a specific quantity is not limited. For example, there are two protrusion portions and two recess portions of the hover cam 167, and there are two protrusion portions and two recess portions of the fifth cam portion 1622. Under the action of the second elastic member 168, the hover cam 167 cooperates with the fifth cam portion 1622 to provide a damping force for implementing the hover effect, thereby keeping the hinge 100 at a predetermined position.

When at least two second gears 152 are configured, the other second gears 152 may be separately connected to a third rod 1643. The third rod 1643 may be mounted on the bracket 164 similar to the first rod 1641. The first elastic member 163 may be sleeved outside the third rod 1643, so that the first elastic member 163 is disposed between the first one-piece cam 162 and the second one-piece cam 165 in a compressed manner, to increase a pushing force for the one-piece cams and further increase a damping force between the matching cams.

When there are two first one-piece cams 162, a set of the first one-piece cam 162, the hover cam 167, and the second elastic member 168 is separately disposed on two sides of the second gear 152 in the axial direction. Each first one-piece cam 162 has a fifth cam portion 1622 corresponding to the hover cam 167. The second elastic member 168 acts on the corresponding hover cam 167, to press the hover cam 167 against the fifth cam portion 1622. In limited space, the damping force of the hinge 100 is increased when the hinge 100 hovers at a predetermined position, and the hinge 100 can reliably hover.

When the second cam portion 1621 and the fifth cam portion 1622 on the first one-piece cam 162 are disposed, the second cam portion 1621 and the fifth cam portion 1622 may be respectively disposed on two opposite sides of the first one-piece cam 162. The second cam portion 1621 cooperates with the first cam portion 161 under the action of the first elastic member 163, and the fifth cam portion 1622 cooperates with the hover cam 167 under the action of the second elastic member 168, to generate a damping force between the matching cam portions.

When the fifth cam portion 1622 is disposed on the first one-piece cam 162, a groove 1623 is disposed on a side that is of the first one-piece cam 162 and that is back to the second gear 152, and the fifth cam portion 1622 is disposed on a surface of the groove 1623. In this way, the hover cam 167 that cooperates with the fifth cam portion 1622 may be partially located in the groove 1623, and space between the bracket 164 and the first one-piece cam 162 is fully utilized, so that a longer second elastic member 168 is mounted on the second rod 1642 to provide a greater elastic force, and a damping force between the hover cam 167 and the fifth cam portion 1622 is increased.

Finally, it should be noted that the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A hinge, comprising: a main shaft, a plurality of connecting rods, fastening brackets arranged in pairs, and support plates arranged in pairs, wherein
one or more connecting rods are respectively disposed on two sides of the main shaft along a direction perpendicular to an axial direction of the main shaft, and one end of each connecting rod is pivoted on the main shaft;
each pair of the fastening brackets is respectively disposed on the two sides of the main shaft along the direction perpendicular to the axial direction of the main shaft, the fastening bracket and the connecting rod that are located on a same side of the main shaft are correspondingly disposed, and the connecting rod is slidably connected to the fastening bracket corresponding to the connecting rod;
each pair of the support plates is respectively disposed on the two sides of the main shaft along the direction perpendicular to the axial direction of the main shaft, the support plate and the fastening bracket that are located on a same side of the main shaft are correspondingly disposed, one end of each support plate is pivoted on the main shaft, the other end thereof is pivoted on the fastening bracket corresponding to the support plate, and pivot axes, on the main shaft, of the connecting rod and the support plate that are located on a same side of the main shaft are spaced apart from each other;
the fastening brackets located on the two sides of the main shaft are capable of rotating relative to the main shaft, so that the hinge switches between an unfolded state and a folded state; and
in a process in which the hinge switches from the unfolded state to the folded state, the fastening brackets located on the two sides of the main shaft rotate toward each other, and the fastening brackets drive the connecting rods and the support plates that correspond to the fastening brackets to rotate, so that display accommodating space is formed between the support plates located on the two sides of the main shaft and the main shaft.

2. The hinge according to claim 1, wherein in a process in which the hinge switches from the folded state to the unfolded state, the fastening brackets located on the two sides of the main shaft rotate away from each other, and the fastening brackets drive the connecting rods and the support plates that correspond to the fastening brackets to rotate, so that the support plates located on the two sides of the main shaft are flush and capable of covering one side of the main shaft.

3. The hinge according to claim 1 or 2, wherein pivot axes of the connecting rods located on the two sides of the main shaft are symmetrically disposed on two sides of pivot axes of a pair of support plates on the main shaft.

4. The hinge according to any one of claims 1 to 3, wherein when the hinge is in the folded state, the connecting rod is located on a side that is of the support plate corresponding to the connecting rod and that is opposite to the display accommodating space, and a spacing between the pivot axes of the connecting rods located on the two sides of the main shaft is greater than a spacing between the support plates that are arranged in pairs and that are close to the main shaft.

5. The hinge according to any one of claims 1 to 4, wherein the connecting rod and the main shaft are in a pivot connection; or
the connecting rod and the main shaft are in a virtual axis connection.

6. The hinge according to any one of claims 1 to 5, wherein the fastening bracket has a first sliding portion, the connecting rod corresponding to the fastening bracket has a second sliding portion, and the first sliding portion and the second sliding portion are in a sliding fit, so that the connecting rod is slidably connected to the fastening bracket.

7. The hinge according to claim 6, wherein the first sliding portion is a guide groove provided on the fastening bracket, the second sliding portion is a guide arm disposed on the connecting rod, and the guide arm is slidably mounted in the guide groove; or
the first sliding portion is a guide arm disposed on the fastening bracket, the second sliding portion is a guide groove provided on the connecting rod, and the guide arm is slidably mounted in the guide groove.

8. The hinge according to any one of claims 1 to 7, wherein each support plate has one or more first arc arms, the main shaft has one or more first arc grooves corresponding to the one or more first arc arms, and the one or more first arc arms are correspondingly slidably mounted in the one or more first arc grooves, so that the support plate is pivoted on the main shaft; or
the support plate and the main shaft are in a pivot connection.

9. The hinge according to any one of claims 1 to 8, wherein each support plate has one or more second arc arms, the fastening bracket has one or more second arc grooves corresponding to the one or more second arc arms, and the one or more second arc arms are correspondingly slidably mounted in the one or more second arc grooves, so that the support plate is pivoted on the fastening bracket; or
the support plate and the fastening bracket are in a pivot connection.

10. The hinge according to any one of claims 1 to 9, wherein the hinge further comprises a synchronization assembly disposed on the main shaft, configured to enable the connecting rods located on the two sides of the main shaft to rotate synchronously in opposite directions.

11. The hinge according to claim 10, wherein the synchronization assembly comprises first gears that are correspondingly fastened to the connecting rods located on the two sides of the main shaft, a pivot axis of each connecting rod coincides with an axis of the first gear corresponding to the connecting rod, and the first gears located on the two sides of the main shaft are in a drive fit.

12. The hinge according to claim 11, wherein the synchronization assembly further comprises an even number of second gears that are sequentially engaged, and the first gears located on the two sides of the main shaft are driven by the even number of second gears.

13. The hinge according to claim 12, wherein the second gears are all single gears; or
two of the second gears are a dual gear, each dual gear comprises a first tooth portion and a second tooth portion that are coaxially disposed, the first gears located on the two sides of the main shaft are correspondingly engaged with the first tooth portions of the dual gears, and the second tooth portions of the two dual gears are engaged with each other.

14. The hinge according to claim 12 or 13, wherein the hinge further comprises a damping assembly mounted on the main shaft, and when the connecting rod rotates relative to the main shaft, the damping assembly is configured to provide a damping force for the connecting rod.

15. The hinge according to claim 14, wherein end parts of the plurality of first gears have first cam portions, the damping assembly comprises a first one-piece cam and a first elastic member, the first one-piece cam is capable of moving in an axial direction of the first gear relative to the first cam portion, the first one-piece cam has a second cam portion that is capable of being correspondingly engaged with the first cam portion, and the first elastic member is capable of acting on the first one-piece cam to press the second cam portion against the first cam portion.

16. The hinge according to claim 15, wherein the damping assembly further comprises a bracket and a first rod that is coaxially connected to the first gear correspondingly; the bracket is fastened to the main shaft; and two ends of the first rod are mounted on the bracket, and the first one-piece cam is slidably mounted on the first rod.

17. The hinge according to claim 16, wherein there is one first one-piece cam and one first elastic member, and each first gear has one first cam portion; or
there are two first one-piece cams and two first elastic members, each first gear has two first cam portions distributed in a back-to-back manner, and a set of the first one-piece cam and the first elastic member is separately disposed on two sides of the first gear in the axial direction.

18. The hinge according to claim 16 or 17, wherein the damping mechanism further comprises a second one-piece cam and a single cam correspondingly spaced apart from the first cam portion, the second one-piece cam is slidably mounted on the first rod, and the single cam is connected to the first rod in a synchronous rotation manner; the second one-piece cam has a third cam portion that is capable of being correspondingly engaged with the single cam; and
the first elastic member is disposed between the first one-piece cam and the second one-piece cam in a compressed manner, the first elastic member is sleeved outside the first rod, and the first elastic member is capable of acting on the second one-piece cam to press the third cam portion against the single cam.

19. The hinge according to claim 18, wherein the damping assembly further comprises a hover cam, a second elastic member, and a second rod, the second gear and the hover cam are separately connected to the second rod in a synchronous rotation manner, the second one-piece cam has a fourth cam portion in a position corresponding to at least one of the second gears, and the fourth cam portion is capable of being correspondingly engaged with the hover cam; and
the second elastic member is disposed between the first one-piece cam and the hover cam in a compressed manner, the second elastic member is sleeved outside the second rod, and the second elastic member is capable of acting on the hover cam to press the hover cam against the fourth cam portion.

20. The hinge according to claim 16 or 17, wherein the damping assembly further comprises a hover cam, a second elastic member, and a second rod, the second gear and the hover cam are separately connected to the second rod in a synchronous rotation manner, the first one-piece cam has a fifth cam portion in a position corresponding to at least one of the second gears, and the fifth cam portion is capable of being correspondingly engaged with the hover cam; and
the second elastic member is disposed between the bracket and the hover cam in a compressed manner, the second elastic member is sleeved outside the second rod, and the second elastic member is capable of acting on the hover cam to press the hover cam against the fifth cam portion.

21. A foldable device, comprising the hinge according to any one of claims 1 to 20, a first housing, a second housing, and a flexible display, wherein the hinge is located between the first housing and the second housing, the fastening bracket located on one side of the main shaft is fastened to the first housing, the fastening bracket located on the other side of the main shaft is fastened to the second housing, two end parts of the flexible display are respectively fastened to the first housing and the second housing, and a middle region of the flexible display is disposed corresponding to the hinge.
